# EUROPEAN PATENT APPLICATION

(11) **EP 4 560 997 A1**
(43) Date of publication of application: **28.05.2025**
(21) Application number: 22952477.2
(22) Date of filing: 29.07.2022
(51) Int. Cl.: H04L 27/00, H04W 84/18

(54) **COMMUNICATION METHOD AND RELATED APPARATUS**

(71) Applicant: Huawei Technologies Co., Ltd., Shenzhen, Guangdong 518129 (CN)
(72) Inventor: ZHANG, Xudong, Shenzhen, Guangdong 518129 (CN); TANG, Weiping, Shenzhen, Guangdong 518129 (CN); WANG, Yali, Shenzhen, Guangdong 518129 (CN); WANG, Jian, Shenzhen, Guangdong 518129 (CN); LIU, Guoquan, Shenzhen, Guangdong 518129 (CN)
(74) Representative: Gill Jennings & Every LLP
(86) International application number: PCT/CN2022/109001
(87) International publication number: WO 2024/021029

(57) **Abstract**

This application discloses a communication method and a related apparatus. This application is applied to a wireless network that supports broadcast communication and/or multicast communication, for example, a NearLink network or vehicle-to-everything. The method includes: generating a first packet, where a first field in the first packet indicates that a type of the first packet is a first type or a second type, the first type corresponds to normal reliable broadcast, and the second type corresponds to improved reliable broadcast; or the first type corresponds to normal reliable multicast, and the second type corresponds to improved reliable multicast; and sending the first packet to a first device. In embodiments of this application, the type of the first packet is the first type or the second type, so that the first packet can meet different reliability requirements, and resource overheads are reduced.

## Description

### TECHNICAL FIELD

This application relates to the field of wireless communication, and in particular, to a communication method and a related apparatus.

### BACKGROUND

There are a plurality of types of communication modes in a network, such as broadcast, unicast, and multicast. A packet may be efficiently transmitted to all devices in a specified network in a broadcast mode. There are many protocols that use broadcast. Functions of broadcast mainly include the following: initializing network configuration through the broadcast when no connection is established on a network; searching for a route on demand through the broadcast before forwarding a packet; quickly notifying a neighbor or an entire network through the broadcast to update a network when node information changes; and in some network protocols, sending a packet through the broadcast to improve forwarding reliability.

Currently, broadcast is used in many scenarios such as network initialization and wireless mesh network (namely, a mesh network) construction. For example, in a dynamic network topology configuration protocol, after a node is powered on, node information is notified through broadcast, and finally a wireless neighbor is established. For another example, in a network address conflict detection protocol, use of an address is declared through broadcast. Different scenarios or different services have different reliability requirements on broadcast communication. For example, reliability of a broadcast message needs to be ensured in some scenarios, and reliability of a broadcast message does not need to be ensured in some other scenarios. Therefore, a broadcast communication solution that can meet different reliability requirements is required.

### SUMMARY

Embodiments of this application disclose a communication method and a related apparatus, to meet reliability requirements of different broadcast packets (or multicast packets).

According to a first aspect, an embodiment of this application provides a communication method. The method includes: generating a first packet, where a first field in the first packet indicates that a type of the first packet is a first type or a second type, the first type corresponds to normal reliable broadcast, and the second type corresponds to improved reliable broadcast; or the first type corresponds to normal reliable multicast, and the second type corresponds to improved reliable multicast; and sending the first packet to a first device. That the first type corresponds to normal reliable broadcast may be replaced with that the first type represents (or indicates) normal reliable broadcast. That the second type corresponds to improved reliable broadcast may be replaced with that the second type represents (or indicates) improved reliable broadcast. That the first type corresponds to normal reliable multicast may be replaced with that the first type represents (or indicates) normal reliable multicast. That the second type corresponds to improved reliable multicast may be replaced with that the second type represents (or indicates) improved reliable multicast. The first type corresponds to the normal reliable broadcast, and the second type corresponds to the improved reliable broadcast; or the first type corresponds to the normal reliable multicast, and the second type corresponds to the improved reliable multicast. The sending the first packet to the first device may be replaced with that a reliability requirement corresponding to the first type is lower than a reliability requirement corresponding to the second type; or may be replaced with that a broadcast packet whose type is the first type requires (or needs) a device to perform a first operation on the received broadcast packet of the first type, and a broadcast packet whose type is the second type requires (or needs) a device to perform a second operation on the received broadcast packet of the second type. The first operation is different from the second operation. The first operation and the second operation may be understood as operations that ensure reliability of the broadcast packet or a multicast packet. For example, the second operation includes an operation of responding (for example, returning a response packet), by the device for the received broadcast packet, to a device that sends the broadcast packet, and the first operation does not include the operation of responding, by the device for the received broadcast packet, to the device that sends the broadcast packet. In this application, a destination address of the broadcast packet is an address indicating broadcast within a wireless network range, and a destination address of the multicast packet is a multicast address. The multicast address may be classified according to any address allocation rule. Alternatively, the broadcast packet needs to be transmitted to each node in a wireless network, and the multicast packet needs to be transmitted to only a specific node in the wireless network, for example, a node that monitors a same multicast address.

The first type and the second type correspond to different reliability requirements. If the type of the first packet is the first type, the first packet is transmitted in a broadcast or multicast manner. In this case, reliability is low, and resource overheads are low. If the type of the first packet is the second type, the first packet is transmitted in a broadcast or multicast manner. In this case, reliability is high, and resource overheads are high. It may be understood that, compared with the packet of the second type, the packet of the first type has an advantage of low resource overheads during transmission, and compared with the packet of the first type, the packet of the second type has an advantage of high reliability during transmission. During transmission, reliability of the packet is higher, so that a fault of the packet during transmission can be detected more quickly. In embodiments of this application, the type of the first packet is the first type or the second type, so that the first packet can meet different reliability requirements, and resource overheads are reduced.

In a possible implementation, the improved reliable broadcast indicates that the device makes a response for a received broadcast packet, the normal reliable broadcast indicates that the device does not make a response for a received broadcast packet, the improved reliable multicast indicates that the device makes a response for a received multicast packet, and the normal reliable multicast indicates that the device does not make a response for a received multicast packet.

In this implementation, the improved reliable broadcast indicates that the device makes a response for the received broadcast packet, to determine whether the first packet is successfully received. This can enhance reliability. The normal reliable broadcast indicates that the device does not make a response for the received broadcast packet, so that fewer packets can be sent, and resource overheads can be reduced. The improved reliable multicast indicates that the device makes a response for the received multicast packet, to determine whether the first packet is successfully received. This can enhance reliability. The normal reliable multicast indicates that the device does not make a response for the received multicast packet, so that fewer packets can be sent, and resource overheads can be reduced.

In a possible implementation, the improved reliable broadcast requires a device to respond to, for the received broadcast packet, the device that sends the broadcast packet, the normal reliable broadcast does not require the device to respond to, for the received broadcast packet, the device that sends the broadcast packet, the improved reliable multicast requires the device to respond to, for the received multicast packet, the device that sends the multicast packet, and the normal reliable multicast does not require the device to respond to, for the received multicast packet, the device that sends the multicast packet. For example, a device 1 sends the first packet to a device 2. If the type of the first packet is the second type, the device 2 responds to the device 1 for the first packet (which corresponds to a requirement of the improved reliable broadcast) after receiving the first packet; or if the type of the first packet is the first type, the device 2 does not need to respond to the device 1 for the first packet (which corresponds to a requirement of the normal reliable broadcast) after receiving the first packet.

In this implementation, the improved reliable broadcast requires the device to respond to, for the received broadcast packet, the device that sends the broadcast packet, to determine whether the first packet is successfully received. This can enhance reliability. The normal reliable broadcast does not require the device to respond to, for the received broadcast packet, the device that sends the broadcast packet, so that fewer packets can be sent, and resource overheads can be reduced. The improved reliable multicast requires the device to respond to, for the received multicast packet, the device that sends the multicast packet, to determine whether the first packet is successfully received. This can enhance reliability. The normal reliable multicast does not require the device to respond to, for the received multicast packet, the device that sends the multicast packet, so that fewer packets can be sent, and resource overheads can be reduced.

In a possible implementation, a reliability requirement of the improved reliable broadcast on the broadcast packet is higher than a reliability requirement of the normal reliable broadcast on the broadcast packet.

In this implementation, the type of the first packet is the first type or the second type, and the first packet may meet different reliability requirements.

In a possible implementation, the improved reliable broadcast requires a device (or a node) to reply with, for the received broadcast packet, a response packet to the device that sends the broadcast packet, and the normal reliable broadcast does not require the device to reply with, for the received broadcast packet, a response packet to the device that sends the broadcast packet. It should be noted that the device that receives the broadcast packet and the device that sends the broadcast packet are neighboring nodes of each other. In other words, the broadcast packet received by the device that receives the broadcast packet is from the device that sends the broadcast packet. For example, the device 1 receives the first packet sent by the device 2. If the type of the first packet is the second type (corresponding to the improved reliable broadcast), the device 2 sends a response packet to the device 1 for the first packet after receiving the first packet; or if the type of the first packet is the first type, the device 2 does not need to send a response packet to the device 1 for the first packet after receiving the first packet.

In this implementation, the improved reliable broadcast requires the device (or the node) to reply with, for the received broadcast packet, the response packet to the device that sends the broadcast packet. This can enhance reliability.

In a possible implementation, the first packet further includes a second field. If the first field in the first packet indicates that the type of the first packet is the second type, the second field in the first packet is used by the first device to make a response. That the second field in the first packet is used by the first device to make a response may be replaced with that the second field in the first packet is used by the first device to make a response for the first packet. Optionally, the second field in the first packet indicates that the first device sends the response packet for the first packet.

In this implementation, the second field in the first packet is used by the first device to make a response, to determine, through the response of the first device, whether the first packet is successfully received.

In a possible implementation, the first packet further includes a third field. The third field in the first packet indicates first alive time of the first packet in a network. The first alive time may be understood as longest alive time of the first packet in the network.

In this implementation, the third field in the first packet indicates the first alive time of the first packet in the network, so that the first packet transmitted in the network disappears at an approximately same time point. This can reduce transmission of an invalid packet.

In a possible implementation, the first packet further includes a sequence number. The sequence number indicates a serial number of the first packet.

In this implementation, the sequence number indicates the serial number of the first packet, so that the device that receives the first packet determines, by using the serial number, whether the first packet is a duplicate packet.

In a possible implementation, the first field, the second field, and the third field are included in a broadcast header (broadcast header). Optionally, the broadcast header further includes a reserved (reserved) field and a fourth field. The fourth field indicates a type of a next header. The reserved field (or referred to as a reserved field) is a field reserved for use in subsequent extension, for example, is initialized to 0. The fourth field is a "next header" field. Optionally, the first packet further includes a basic header (basic header) of a network layer. The first packet may further include another extension header and an upper-layer header.

In this implementation, the first field, the second field, and the third field are included in the broadcast header, so that a packet that can meet different reliability requirements can be conveniently generated.

In a possible implementation, the generating the first packet includes: constructing the basic header of the network layer, where the basic header includes a source address (source address), a destination address (destination address), and a fifth field (next header) that points to the broadcast header, the source address is a unicast address of a local node, and the destination address is an address indicating broadcast within a wireless network range, for example, 255.255, or the destination address is a multicast address, or the destination address is a unicast address of a node that replies with the broadcast packet (or the multicast packet); constructing the broadcast header, where the broadcast header includes the first field, the second field, and the third field; and adding data (payload) following the broadcast header to obtain the first packet. The adding data (payload) following the broadcast header to obtain the first packet may be replaced with: adding data (payload) and one or more headers following the broadcast header to obtain the first packet. The constructing the broadcast header may be: adding the broadcast header following the basic header.

In this implementation, a packet that meets different reliability requirements may be constructed.

In a possible implementation, the method further includes: receiving a second packet in response to the first packet, where a first field in the second packet indicates that a type of the second packet is the second type, and a second field in the second packet indicates that the first device successfully receives the first packet. Optionally, after the second packet in response to the first packet is received, the first packet is deleted from a sending queue of the first device. This can avoid repeatedly sending the first packet to the first device.

In this implementation, the second field in the second packet indicates that the first device successfully receives the first packet, and it can be accurately and quickly determined, based on the second packet, that the first packet is successfully received by the first device.

In a possible implementation, before the receiving a second packet in response to the first packet, the method further includes: when a response packet in response to the first packet is not received in first waiting time after the first packet is sent, sending a third packet as a retransmitted packet of the first packet to the first device.

In this implementation, the third packet as the retransmitted packet of the first packet is sent to the first device. This can improve reliability of the first packet.

In a possible implementation, the third field in the first packet indicates the first alive time of the first packet in the network, a third field in the third packet indicates second alive time of the first packet in the network, and the second alive time is shorter than or equal to the first alive time. Optionally, the second alive time is equal to the first alive time minus the first waiting time.

In this implementation, the second alive time is shorter than or equal to the first alive time, so that the first packet transmitted in the network disappears at an approximately same time point. This can reduce transmission of an invalid packet in the network.

In a possible implementation, the third field in the first packet indicates the first alive time of the first packet in the network. The method further includes: when a response packet in response to the first packet is not received in the first waiting time after the first packet is sent, determining fifth alive time, where the fifth alive time is equal to the first alive time minus the first waiting time; and when the fifth alive time is less than 0, stopping retransmitting the first packet. Optionally, the first packet is deleted from the sending queue of the first device. This can avoid retransmitting the first packet to the first device.

When the packet is retransmitted, it should be noted that local waiting time (for example, the first waiting time) needs to be correspondingly deducted from the first alive time (alive time). If the local waiting time is insufficient for deduction, that is, if the fifth alive time is less than 0, retransmission of the first packet is stopped, and the first packet is deleted from the sending queue of the first device.

In this implementation, retransmission of an invalid packet can be reduced.

In a possible implementation, the first waiting time is determined in an exponential backoff manner. The first waiting time may be understood as a retransmission time interval. Backoff time needs to be considered for the retransmission time interval. To reduce extremely frequent transmission from a transmitter, the exponential backoff manner can be used.

In a possible implementation, the third field in the first packet indicates the first alive time of the first packet in the network. The method further includes: locally caching the first packet for storage; and deleting the first packet after time for locally caching the first packet for storage exceeds the first alive time.

In this implementation, the first packet is deleted after the time for locally caching the first packet for storage exceeds the first alive time, so that an occupied cache resource can be released in time.

In a possible implementation, the method is applied to a network service and application, for example, network initialization, mesh network construction, address conflict detection, or service query. The method provided in this embodiment of this application is applicable to any scenario in which a packet is transmitted in a broadcast or multicast manner.

In this implementation, the first packet is transmitted in the broadcast or multicast manner, so that reliability requirements of different scenarios or services can be met.

According to a second aspect, an embodiment of this application provides another communication method. The method is applied to a first device. The method includes: receiving a first packet from a second device, where a first field in the first packet indicates that a type of the first packet is a first type or a second type, the first type corresponds to normal reliable broadcast, and the second type corresponds to improved reliable broadcast; or the first type corresponds to normal reliable multicast, and the second type corresponds to improved reliable multicast; and processing the first packet based on the type of the first packet. For description of the first type, the second type, the normal reliable broadcast, the normal reliable broadcast, the normal reliable multicast, and the improved reliable multicast in the second aspect, refer to related description in the first aspect. Details are not described herein again.

The first type and the second type correspond to different reliability requirements. If the type of the first packet is the first type, the first packet is transmitted in a broadcast or multicast manner. In this case, reliability is low, and resource overheads are low. If the type of the first packet is the second type, the first packet is transmitted in a broadcast or multicast manner. In this case, reliability is high, and resource overheads are high. It may be understood that, compared with the packet of the second type, the packet of the first type has an advantage of low resource overheads during transmission, and compared with the packet of the first type, the packet of the second type has an advantage of high reliability during transmission. During transmission, reliability of the packet is higher, so that a fault of the packet during transmission can be detected more quickly. In this embodiment of this application, the first field in the first packet indicates that the type of the first packet is the first type or the second type. The first packet is processed based on the type of the first packet, so that reliability requirements of packets of different types can be met, and resource overheads can be reduced.

In a possible implementation, the improved reliable broadcast indicates that the device makes a response for a received broadcast packet, the normal reliable broadcast indicates that the device does not make a response for a received broadcast packet, the improved reliable multicast indicates that the device makes a response for a received multicast packet, and the normal reliable multicast indicates that the device does not make a response for a received multicast packet.

In this implementation, the improved reliable broadcast indicates that the device makes a response for the received broadcast packet, to determine whether the first packet is successfully received. This can enhance reliability. The normal reliable broadcast indicates that the device does not make a response for the received broadcast packet, so that fewer packets can be sent, and resource overheads can be reduced. The improved reliable multicast indicates that the device makes a response for the received multicast packet, to determine whether the first packet is successfully received. This can enhance reliability. The normal reliable multicast indicates that the device does not make a response for the received multicast packet, so that fewer packets can be sent, and resource overheads can be reduced.

In a possible implementation, the improved reliable broadcast requires a device to respond to, for the received broadcast packet, the device that sends the broadcast packet, the normal reliable broadcast does not require the device to respond to, for the received broadcast packet, the device that sends the broadcast packet, the improved reliable multicast requires the device to respond to, for the received multicast packet, the device that sends the multicast packet, and the normal reliable multicast does not require the device to respond to, for the received multicast packet, the device that sends the multicast packet.

In this implementation, the improved reliable broadcast requires the device to respond to, for the received broadcast packet, the device that sends the broadcast packet, to determine whether the first packet is successfully received. This can enhance reliability. The normal reliable broadcast does not require the device to respond to, for the received broadcast packet, the device that sends the broadcast packet, so that fewer packets can be sent, and resource overheads can be reduced. The improved reliable multicast requires the device to respond to, for the received multicast packet, the device that sends the multicast packet, to determine whether the first packet is successfully received. This can enhance reliability. The normal reliable multicast does not require the device to respond to, for the received multicast packet, the device that sends the multicast packet, so that fewer packets can be sent, and resource overheads can be reduced.

In a possible implementation, a reliability requirement of the improved reliable broadcast on the broadcast packet is higher than a reliability requirement of the normal reliable broadcast on the broadcast packet.

In this implementation, the type of the first packet is the first type or the second type, and the first packet may meet different reliability requirements.

In a possible implementation, the improved reliable broadcast requires a device (or a node) to reply with, for the received broadcast packet, a response packet to the device that sends the broadcast packet, and the normal reliable broadcast does not require the device to reply with, for the received broadcast packet, a response packet to the device that sends the broadcast packet.

In this implementation, the improved reliable broadcast requires the device (or the node) to reply with, for the received broadcast packet, the response packet to the device that sends the broadcast packet. This can enhance reliability of the broadcast packet.

In a possible implementation, the first packet further includes a second field. If the first field in the first packet indicates that the type of the first packet is the second type, the second field in the first packet is used by the first device to make a response. That the second field in the first packet is used by the first device to make a response may be replaced with that the second field in the first packet is used by the first device to make a response for the first packet. Optionally, the second field in the first packet indicates that the first device sends the response packet for the first packet.

In this implementation, the second field in the first packet is used by the first device to make a response, to determine, through the response of the first device, whether the first packet is successfully received.

In a possible implementation, the first packet further includes a third field. The third field in the first packet indicates first alive time of the first packet in a network.

In this implementation, the third field in the first packet indicates the first alive time of the first packet in the network, so that the first packet transmitted in the network disappears at an approximately same time point. This can reduce transmission of an invalid packet in the network.

In a possible implementation, the first packet further includes a sequence number. The sequence number indicates a serial number of the first packet.

In this implementation, the sequence number indicates the serial number of the first packet, so that the device that receives the first packet determines, by using the serial number, whether the first packet is a duplicate packet.

In a possible implementation, the first field, the second field, and the third field are included in a broadcast header (broadcast header). Optionally, the broadcast header further includes a reserved (reserved) field and a fourth field. The fourth field indicates a type of a next header. The reserved field (or referred to as a reserved field) is a field reserved for use in subsequent extension, for example, is initialized to 0. The fourth field is a "next header" field. Optionally, the first packet further includes a basic header (basic header) of a network layer. The first packet may further include another extension header and an upper-layer header.

In this implementation, the first field, the second field, and the third field are included in the broadcast header, so that a packet that can meet different reliability requirements can be conveniently generated.

In a possible implementation, the processing the first packet based on the type of the first packet includes: when the type of the first packet is the second type, sending a second packet in response to the first packet to the second device, and adding the first packet to a packet sending queue of a first neighboring node, where a first field in the second packet indicates that a type of the second packet is the second type, and a second field in the second packet indicates that the first device successfully receives the first packet.

In this implementation, when the type of the first packet is the second type, the second packet in response to the first packet is sent to the second device, and the first device successfully receives the first packet through an indication. This improves reliability of the first packet.

In a possible implementation, after the adding the first packet to a packet sending queue of a first neighboring node, the method further includes: sending the first packet to the first neighboring node; and after receiving a fourth packet that is from the first neighboring node and that is in response to the first packet, deleting the first packet from the packet sending queue of the first neighboring node. A first field in the fourth packet indicates that a type of the fourth packet is the second type, and a second field in the fourth packet indicates that the first neighboring node successfully receives the first packet.

In this implementation, after the fourth packet that is from the first neighboring node and that is in response to the first packet is received, the first packet is deleted from the packet sending queue of the first neighboring node. This can avoid repeatedly sending the second packet to the first neighboring node that successfully receives the first packet.

In a possible implementation, a third field in the first packet sent to the first neighboring node indicates third alive time of the first packet in the network, the third field in the first packet from the second device indicates the first alive time of the first packet in the network, and the third alive time is shorter than or equal to the first alive time. Optionally, the third alive time is equal to the first alive time minus local processing time, and the local processing time is time for processing the first packet by the first device.

In this implementation, the third alive time is shorter than or equal to the first alive time, so that the first packet transmitted in the network disappears at an approximately same time point. This can reduce transmission of an invalid packet in the network.

In a possible implementation, before the receiving a fourth packet that is from the first neighboring node and that is in response to the first packet, the method further includes: if the response packet that is from the first neighboring node and that is in response to the first packet is not received in first waiting time after the first packet is sent to the first neighboring node, sending a fifth packet as a retransmitted packet of the first packet to the first neighboring node. Optionally, alive time that is of the fifth packet in the network and that is indicated by a third field in the fifth packet is shorter than or equal to the alive time that is of the first packet in the network and that is indicated by the third field in the first packet sent by the first device to the first neighboring node. For example, the alive time that is of the fifth packet in the network and that is indicated by the third field in the fifth packet is equal to the alive time that is of the first packet in the network and that is indicated by the third field in the first packet sent by the first device to the first neighboring node minus the first waiting time.

In this implementation, the fifth packet as the retransmitted packet of the first packet is sent to the first neighboring node. This can improve reliability of the first packet.

In a possible implementation, the second type corresponds to the improved reliable multicast, and a destination address in the first packet is a multicast address. The method further includes: when the multicast address in the first packet is monitored, sending the first packet to a control plane program or an application for processing, and forwarding the first packet to the first neighboring node; or when the multicast address in the first packet is not monitored, forwarding the first packet to the first neighboring node.

In this implementation, corresponding processing is performed based on whether the multicast address in the first packet is monitored, so that a multicast packet monitored by the first device can be sent to the control plane program or the application for processing, and a multicast packet that is not concerned by the first device can be forwarded.

In a possible implementation, the processing the first packet based on the type of the first packet includes: when the type of the first packet is the first type, adding the first packet to a packet sending queue of a first neighboring node; and sending the first packet to the first neighboring node. A third field in the first packet sent to the first neighboring node indicates third alive time of the first packet in the network, and the third field in the first packet from the second device indicates the first alive time of the first packet in the network. The third alive time is shorter than or equal to the first alive time.

In this implementation, the third alive time is shorter than or equal to the first alive time, so that the first packet transmitted in the network disappears at an approximately same time point. This can reduce transmission of an invalid packet in the network.

In a possible implementation, the processing the first packet based on the type of the first packet includes: when the type of the first packet is the first type, adding the first packet to a packet sending queue of a first neighboring node; before the first packet is sent to the first neighboring node, determining sixth alive time, where the sixth alive time is equal to the first alive time minus local processing time, and the local processing time is time for processing the first packet by the first device; and when the sixth alive time is less than 0, canceling sending the first packet to the first neighboring node.

In this implementation, when the sixth alive time is less than 0, the first device cancels sending the first packet to the first neighboring node, so that fewer invalid first packets can be sent.

In a possible implementation, the third field in the first packet from the second device indicates the first alive time of the first packet in the network. The method further includes: locally caching the first packet for storage; and deleting the first packet after time for locally caching the first packet for storage exceeds the first alive time.

In this implementation, the first packet is deleted after the time for locally caching the first packet exceeds the first alive time, so that an occupied cache resource can be released in time.

In a possible implementation, the method further includes: in a process of locally caching the first packet for storage, if a new neighboring node is found, adding the first packet to a sending queue of the new neighboring node.

In this implementation, the first packet may be forwarded to the new neighboring node.

In a possible implementation, the method further includes: locally caching digest information of the first packet for fourth alive time, where the fourth alive time is longer than the first alive time.

In consideration of a case in which clocks of devices in the network may be asynchronous, a time sequence of aging the first packet on different devices is uncontrollable. The time for locally caching the digest information of the first packet is longer than the time for locally caching the first packet, to avoid a problem that whether the first packet is the duplicate packet cannot be determined when the first packet is received from another neighbor after the first packet is aged. The digest information of the packet is extracted locally, for example, is indicated by an index of the packet, namely, (source address+sequence number), namely, the source address+the sequence number. In this implementation, the fourth alive time is longer than the first alive time. This can avoid a problem that whether the first packet is the duplicate packet cannot be determined when the first packet is received from another neighbor after the first packet is aged.

In a possible implementation, before the processing the first packet based on the type of the first packet, the method further includes: determining, based on a source address and a sequence number that are in the first packet, whether the first packet is a duplicate packet; and the processing the first packet based on the type of the first packet includes: when the first packet is a new packet (namely, a non-duplicate packet), processing the first packet based on the type of the first packet. Optionally, a combination of the source address and the sequence number in the first packet is used as an index of the first packet, and whether the first packet is the duplicate packet is determined by searching whether the combination of the source address and the sequence number in the first packet is locally cached. After receiving any packet, the first device may cache the any packet and an index of the any packet, namely, a combination of a source address and a sequence number in the any packet.

In this implementation, when the first packet is a new packet (namely, a non-duplicate packet), the first packet is processed based on the type of the first packet. This can avoid repeatedly processing the first packet, so that resource overheads can be reduced.

According to a third aspect, an embodiment of this application provides a communication apparatus. The communication apparatus has a function of implementing behavior in the method embodiment in the first aspect. The communication apparatus may be a communication device, or may be a component (for example, a processor, a chip, or a chip system) of a communication device, or may be a logical module or software that can implement all or some functions of a communication device. The function of the communication apparatus may be implemented by hardware, or may be implemented by hardware by executing corresponding software. The hardware or the software includes one or more modules or units corresponding to the functions. In a possible implementation, the communication apparatus includes a processing module and a transceiver module. The processing module is configured to generate a first packet, where a first field in the first packet indicates that a type of the first packet is a first type or a second type, the first type corresponds to normal reliable broadcast, and the second type corresponds to improved reliable broadcast, or the first type corresponds to normal reliable multicast, and the second type corresponds to improved reliable multicast. The transceiver module is configured to send the first packet to a first device.

In a possible implementation, the processing module is specifically configured to: construct a basic header of a network layer, where the basic header includes a source address (source address), a destination address (destination address), and a fifth field (next header) that points to a broadcast header, the source address is a unicast address of a local node, and the destination address is an address indicating broadcast within a wireless network range, for example, 255.255, or the destination address is a multicast address; construct the broadcast header, where the broadcast header includes the first field, a second field, and a third field; and add data (payload) following the broadcast header to obtain the first packet. The adding data (payload) following the broadcast header to obtain the first packet may be replaced with: adding data (payload) and one or more headers following the broadcast header to obtain the first packet.

In a possible implementation, the transceiver module is further configured to receive a second packet in response to the first packet, where a first field in the second packet indicates that a type of the second packet is the second type, and a second field in the second packet indicates that the first device successfully receives the first packet. Optionally, the processing module is further configured to: after receiving the second packet in response to the first packet, delete the first packet from a sending queue of the first device.

In a possible implementation, the transceiver module is further configured to: if a response packet in response to the first packet is not received in first waiting time after the first packet is sent, send a third packet as a retransmitted packet of the first packet to the first device.

In a possible implementation, the processing module is further configured to: if a response packet in response to the first packet is not received in first waiting time after the first packet is sent, determine fifth alive time, where the fifth alive time is equal to first alive time minus the first waiting time; and when the fifth alive time is less than 0, stop retransmitting the first packet.

In a possible implementation, a third field in the first packet indicates the first alive time of the first packet in a network. The processing module is further configured to: locally caching the first packet for storage; and deleting the first packet after time for locally caching the first packet for storage exceeds the first alive time.

For possible implementations of the communication apparatus in the third aspect, refer to the possible implementations of the first aspect.

For technical effects brought by the third aspect or the possible implementations of the third aspect, refer to description of the technical effects brought by the first aspect or the possible implementations of the first aspect.

According to a fourth aspect, an embodiment of this application provides a communication apparatus. The communication apparatus has a function of implementing behavior in the method embodiment in the second aspect. The communication apparatus (a first device) may be a communication device, or may be a component (for example, a processor, a chip, or a chip system) of a communication device, or may be a logical module or software that can implement all or some functions of a communication device. The function of the communication apparatus may be implemented by hardware, or may be implemented by hardware by executing corresponding software. The hardware or the software includes one or more modules or units corresponding to the functions. In a possible implementation, the communication apparatus includes a processing module and a transceiver module. The transceiver module is configured to receive a first packet from a second device, where a first field in the first packet indicates that a type of the first packet is a first type or a second type, the first type corresponds to normal reliable broadcast, and the second type corresponds to improved reliable broadcast, or the first type corresponds to normal reliable multicast, and the second type corresponds to improved reliable multicast. The processing module is configured to process the first packet based on the type of the first packet.

In a possible implementation, the processing module is specifically configured to: when the type of the first packet is the second type, send, by using the transceiver module, a second packet in response to the first packet to the second device, and add the first packet to a packet sending queue of a first neighboring node, where a first field in the second packet indicates that a type of the second packet is the second type, and a second field in the second packet indicates that the first device successfully receives the first packet.

In a possible implementation, the transceiver module is further configured to send the first packet to the first neighboring node. The processing module is further configured to: after receiving a fourth packet that is from the first neighboring node and that is in response to the first packet, delete the first packet from the packet sending queue of the first neighboring node, where a first field in the fourth packet indicates that a type of the fourth packet is the second type, and a second field in the fourth packet indicates that the first neighboring node successfully receives the first packet.

In a possible implementation, the transceiver module is further configured to: if a response packet that is from the first neighboring node and that is in response to the first packet is not received in first waiting time after the first packet is sent to the first neighboring node, send a fifth packet as a retransmitted packet of the first packet to the first neighboring node.

In a possible implementation, the second type corresponds to the improved reliable multicast, and a destination address in the first packet is a multicast address. The processing module is further configured to: when the multicast address in the first packet is monitored, send the first packet to a control plane program or an application for processing, and forward the first packet to the first neighboring node; or when the multicast address in the first packet is not monitored, forward the first packet to the first neighboring node.

In a possible implementation, the processing module is specifically configured to: when the type of the first packet is the first type, add the first packet to a packet sending queue of a first neighboring node. The transceiver module is further configured to send the first packet to the first neighboring node, where a third field in the first packet sent to the first neighboring node indicates third alive time of the first packet in a network, and a third field in the first packet from the second device indicates first alive time of the first packet in the network. The third alive time is shorter than or equal to the first alive time.

In a possible implementation, the processing module is specifically configured to: when the type of the first packet is the first type, add the first packet to a packet sending queue of a first neighboring node; before the first packet is sent to the first neighboring node, determine sixth alive time, where the sixth alive time is equal to the first alive time minus local processing time, and the local processing time is time for processing the first packet by the first device; and when the sixth alive time is less than 0, cancel sending the first packet to the first neighboring node.

In a possible implementation, the processing module is further configured to: locally cache the first packet for storage; and delete the first packet after time for locally caching the first packet for storage exceeds the first alive time.

In a possible implementation, the processing module is further configured to: in a process of locally caching the first packet for storage, if a new neighboring node is found, add the first packet to a sending queue of the new neighboring node.

In a possible implementation, the processing module is further configured to determine, based on a source address and a sequence number that are in the first packet, whether the first packet is a duplicate packet. The processing module is specifically configured to: when the first packet is a new packet (namely, a non-duplicate packet), process the first packet based on the type of the first packet.

For possible implementations of the communication apparatus in the fourth aspect, refer to the possible implementations of the second aspect.

For technical effects brought by the fourth aspect or the possible implementations of the fourth aspect, refer to description of the technical effects brought by the second aspect or the possible implementations of the second aspect.

According to a fifth aspect, an embodiment of this application provides another communication apparatus. The communication apparatus includes a processor, the processor is coupled to a memory, and the memory is configured to store a program or instructions. When the program or the instructions is/are executed by the processor, the communication apparatus performs the method according to any one of the first aspect or the possible implementations of the first aspect, or the communication apparatus performs the method according to any one of the second aspect or the possible implementations of the second aspect.

In this embodiment of this application, in a process of performing the foregoing methods, a process of sending information (or a signal) in the foregoing methods may be understood as a process of outputting information based on instructions of the processor. When the information is output, the processor outputs the information to a transceiver, so that the transceiver transmits the information. After the information is output by the processor, other processing may further need to be performed on the information before the information arrives at the transceiver. Similarly, when the processor receives input information, the transceiver receives the information, and inputs the information into the processor. Further, after the transceiver receives the information, other processing may need to be performed on the information before the information is input into the processor.

Unless otherwise specified, or if operations such as sending and/or receiving related to the processor do not contradict an actual function or internal logic of the operations in related description, all the operations may be generally understood as an output based on instructions of the processor.

In an implementation process, the processor may be a processor specially configured to perform these methods, or may be a processor, for example, a general-purpose processor that executes computer instructions in the memory to perform these methods. For example, the processor may be further configured to execute the program stored in the memory. When the program is executed, the communication apparatus is enabled to perform the method according to any one of the first aspect or the possible implementations of the first aspect.

In a possible implementation, the memory is located outside the communication apparatus. In a possible implementation, the memory is located inside the communication apparatus.

In a possible implementation, the processor and the memory may alternatively be integrated into one component. In other words, the processor and the memory may alternatively be integrated together.

In a possible implementation, the communication apparatus further includes a transceiver. The transceiver is configured to receive a signal, send a signal, or the like.

According to a sixth aspect, this application provides another communication apparatus. The communication apparatus includes a processing circuit and an interface circuit. The interface circuit is configured to obtain data or output data. The processing circuit is configured to perform the method according to any one of the first aspect or the possible implementations of the first aspect, or perform the method according to any one of the second aspect or the possible implementations of the second aspect.

According to a seventh aspect, this application provides a computer-readable storage medium. The computer-readable storage medium stores a computer program, and the computer program includes program instructions. When the program instructions are executed, a computer is enabled to perform the method according to any one of the first aspect or the possible implementations of the first aspect, or perform the method according to any one of the second aspect or the possible implementations of the second aspect.

According to an eighth aspect, this application provides a computer program product. The computer program product includes a computer program, and the computer program includes program instructions. When the program instructions are executed, a computer is enabled to perform the method according to any one of the first aspect or the possible implementations of the first aspect, or perform the method according to any one of the second aspect or the possible implementations of the second aspect.

According to a ninth aspect, this application provides a communication system, including the communication apparatus according to any one of the third aspect or the possible implementations of the third aspect, and the communication apparatus according to any one of the fourth aspect or the possible implementations of the fourth aspect.

According to a tenth aspect, this application provides a chip, including a processor and a communication interface. The processor reads, through the communication interface, instructions stored in a memory, to perform the method according to any one of the first aspect to the sixth aspect, or to perform the method according to any one of the second aspect or the possible implementations of the second aspect.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is an example diagram of an architecture of a wireless network to which an embodiment of this application is applicable;
FIG. 2 is an interaction flowchart of a communication method according to an embodiment of this application;
FIG. 3 is a schematic interaction diagram of another broadcast communication method according to an embodiment of this application;
FIG. 4 is a schematic interaction diagram of a multicast communication method according to an embodiment of this application;
FIG. 5 is a schematic interaction diagram of another broadcast communication method according to an embodiment of this application;
FIG. 6 is a schematic interaction diagram of another multicast communication method according to an embodiment of this application;
FIG. 7 shows an example of an improved reliable broadcast transmission process according to an embodiment of this application;
FIG. 8 shows an example of an improved reliable multicast transmission process according to an embodiment of this application;
FIG. 9 shows an example of a normal reliable broadcast transmission process according to an embodiment of this application;
FIG. 10 shows an example of a normal reliable multicast transmission process according to an embodiment of this application;
FIG. 11 is a diagram of a structure of a communication apparatus 1100 according to an embodiment of this application;
FIG. 12 is a diagram of a structure of another communication apparatus 120 according to an embodiment of this application; and
FIG. 13 is a diagram of a structure of another communication apparatus 130 according to an embodiment of this application.

### DESCRIPTION OF EMBODIMENTS

Terms "first", "second", and the like in the specification, claims, and accompanying drawings of this application are merely used to distinguish between different objects, and are not used to describe a specific order. In addition, terms such as "including" and "having" and any other variants thereof are intended to cover a non-exclusive inclusion. For example, a process, a method, a system, a product, a device, or the like that includes a series of steps or units is not limited to the listed steps or units, but optionally further includes an unlisted step or unit, or optionally further includes another inherent step or unit of the process, the method, the product, the device, or the like.

An "embodiment" mentioned in the specification mean that a particular characteristic, structure, or feature described with reference to the embodiment may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described in the specification may be combined with another embodiment.

Terms used in the following embodiments of this application are merely intended to describe specific embodiments, but are not intended to limit this application. The terms "a", "an", "the", "the foregoing", "the", and "this" of singular forms used in this specification and the appended claims of this application are also intended to include plural forms, unless otherwise specified in the context clearly. It should be understood that the term "and/or" used in this application indicates and includes any or all possible combinations of one or more of listed items. For example, "A and/or B" may indicate three cases: Only A exists, only B exists, and both A and B exist, where A and B may be singular or plural. The term "a plurality of" used in this application means two or more.

It may be understood that, in embodiments of this application, "B corresponding to A" indicates that there is a correspondence between A and B, and B may be determined based on A. However, it should be further understood that determining (or generating) B according to (or based on) A does not mean that B is determined (or generated) according to (or based on) only A. B may alternatively be determined (or generated) according to (or based on) A and/or other information.

As described in the background, different scenarios or different services have different reliability requirements on broadcast communication. For example, in some scenarios, a high reliability requirement needs to be imposed on a broadcast message, and in some other scenarios, a low reliability requirement needs to be imposed on the broadcast message. Therefore, it is necessary to study a broadcast communication solution that can meet different reliability requirements. Embodiments of this application provide a broadcast communication solution and a multicast communication solution that both can meet different reliability requirements.

The following describes technical solutions of embodiments in this application with reference to accompanying drawings.

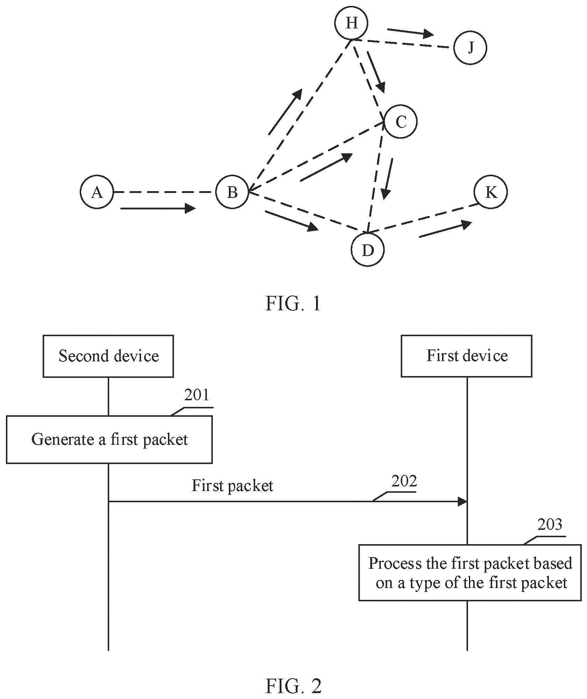

FIG. 1 is an example diagram of an architecture of a wireless network to which an embodiment of this application is applicable. As shown in FIG. 1, a node A, a node B, a node C, a node D, a node H, a node J, and a node K are nodes in a same wireless network. A direction of an arrow indicates a flow direction of a broadcast packet (or multicast communication), and a dashed line between two nodes indicates a communication link between the two nodes. For example, the node A (a source node) in FIG. 1 transmits a broadcast packet 1. A transmission process of the broadcast packet 1 is as follows: The node A sends the broadcast packet 1 to the node B; the node B separately forwards the broadcast packet 1 to the node C, the node D, and the node H; the node H separately forwards the broadcast packet 1 to the node C and the node J; the node C forwards the broadcast packet 1 to the node D; and the node D forwards the broadcast packet 1 to the node K. In the transmission process of the broadcast packet 1, the node A is a source node, the node B, the node C, the node D, and the node H are forwarding nodes (or referred to as intermediate nodes), and the node J and the node K are destination nodes. The source node may be understood as a node that only sends a broadcast packet (or a multicast packet) to another node in one time of broadcast communication (or multicast communication), the forwarding node may be understood as a node that forwards a received broadcast packet (or multicast packet) to another node in one time of broadcast communication (or multicast communication), and the destination node may be understood as a node that only receives a broadcast packet (or a multicast packet) sent by another node in one time of broadcast communication (or multicast communication). In other words, the source node only sends the broadcast packet (or the multicast packet) to another node, the forwarding node receives the broadcast packet (or the multicast packet) and forwards the broadcast packet (or the multicast packet) to the another node, and the destination node only receives the broadcast packet (or the multicast packet). It should be noted that the source node, the forwarding node, and the destination node in the wireless network may change dynamically, but are not fixed. In the wireless network, if there is a communication link between two nodes, the two nodes are neighboring nodes for each other. For example, in FIG. 1, a neighboring node of the node A includes the node B, neighboring nodes of the node B include the node A, the node H, the node C, and the node D, neighboring nodes of the node C include the node B, the node D, and the node H, and neighboring nodes of the node H include the node B, the node C, and the node J. It should be understood that the wireless network shown in FIG. 1 is merely an example, and the wireless network may include more or fewer nodes.

It should be noted that FIG. 1 is merely an example architecture diagram, and may be an architecture diagram in another form. For example, the wireless network may alternatively be a tree-shaped multi-hop topology structure, or a tree-shaped three-layer (or more layers) multi-hop topology structure. Although not shown in FIG. 1, in addition to the functional entities shown in FIG. 1, another functional entity may be included in FIG. 1. The methods provided in embodiments of this application may be applied to the wireless network shown in FIG. 1. Certainly, the methods provided in embodiments of this application may alternatively be applied to another wireless network. This is not limited in embodiments of this application. For example, the methods in embodiments of this application may be applied to any wireless network that can perform transmission in a broadcast or multicast manner, for example, a fabric (fabric) network, a mesh network, a mobile ad hoc network (mobile Ad hoc network, MANET), or a low-power and lossy network (low-power and lossy, LLN). For another example, the wireless network shown in FIG. 1 is a NearLink network, and the wireless network shown in FIG. 1 includes at least one grant node (grant node) and at least one terminal node (terminal node). The grant node (which is referred to as a G node for short) is configured to send data scheduling information on an access stratum of a communication system (for example, a NearLink communication system), and the terminal node (which is referred to as a T node for short) is configured to: receive the data scheduling information on the access stratum of the communication system, and send corresponding data based on the received data scheduling information.

To meet reliability requirements of different scenarios or different services on broadcast communication (or multicast communication), an embodiment of this application provides (or defines) a header (a broadcast header) used for broadcast communication in a wireless network and an assembly manner of the broadcast header in a wireless network packet. A wireless network header may include a basic header (basic header) and several extension headers following the basic header. The broadcast header provided in this embodiment of this application is an extension header of a wireless network packet. It should be noted that the broadcast header (broadcast header) defined in this embodiment of this application may be replaced with another name. This is not limited in this application. Table 1 shows an example of a broadcast header according to an embodiment of this application.

**Table 1**

| | | | | |
|---|---|---|---|---|
| next header | type | ACK | reserved | alive time (8) |
| (8) | (2) | (1) | (13) | |
| sequence number | | | | |
| (32) | | | | |

As shown in Table 1, the broadcast header includes the following fields: "next header", "type", "ACK", "reserved", "alive time", and "sequence number". Herein, "next header" occupies 8 bits (bits), "type" occupies 2 bits, "ACK" occupies 1 bit, "reserved" occupies 13 bits, "alive time" occupies 8 bits, and "sequence number" occupies 32 bits. It should be noted that both "type" and "ACK" in the broadcast header are indispensable (or necessary), and "next header", "reserved", "alive time" and "sequence number" are optional. A quantity of bits occupied by each field in the broadcast header may be flexibly configured based on a requirement. This is not limited in this application. In other words, any field in the broadcast header may occupy more or fewer fields. For example, "type" occupies 1 bit, and "reserved" occupies 14 bits. For another example, "alive time" occupies 9 bits, and "reserved" occupies 12 bits. For another example, "alive time" occupies 7 bits, and "reserved" occupies 14 bits.

Meanings of the fields in the broadcast header are described below.

The field "next header" specifies (or indicates) a type of a next header.

The field "type" is a type of a broadcast packet (or a multicast packet), in other words, "type" is a type of a broadcast packet (or a multicast packet), or "type" indicates a type of the broadcast packet (or the multicast packet). For example, "type" occupies 2 bits. When a value of "type" is 0 (that is, the 2 bits occupied by "type" are 00), the type of the broadcast packet corresponds to (or represents) normal reliable broadcast; when a value of "type" is 1 (that is, the 2 bits occupied by "type" are 01), the type of the broadcast packet corresponds to (or represents) improved reliable broadcast; when a value of "type" is 2 (that is, the 2 bits occupied by "type" are 10), a meaning of "type" is not defined; or when a value of "type" is 3 (that is, the 2 bits occupied by "type" are 11), a meaning of "type" is not defined. In this example, when the value of "type" is 2 or 3, the corresponding meaning of "type" is reserved. For example, "type" occupies 1 bit. When a value of "type" is 0 (that is, the 1 bit occupied by "type" is 0), the type of the broadcast packet corresponds to (or represents) normal reliable broadcast; or when a value of "type" is 1 (that is, the 1 bit occupied by "type" is 1), the type of the broadcast packet corresponds to (or represents) improved reliable broadcast.

The field "ACK" is used by a receiver to make a response for a received broadcast packet (or multicast packet), where "type" in the broadcast packet corresponds to improved reliable broadcast. The receiver is any node that receives the broadcast packet (or the multicast packet) in a wireless network. Optionally, when "type" in the broadcast packet (or the multicast packet) sent by a transmitter to the receiver corresponds to the improved reliable broadcast, the receiver replies with a response (acknowledgement, ACK) packet to the transmitter. "ACK" in the response packet may be set to 1, and in another case, "ACK" is set to 0. For example, a transmitter (for example, the node A in FIG. 1) sends a broadcast packet to the receiver (for example, the node B in FIG. 1), "type" in the broadcast packet corresponds to the improved reliable broadcast, and "ACK" in the broadcast packet is set to 0. In other words, a value of "ACK" is 0. After receiving the broadcast packet, the receiver replies with a response packet to the transmitter, and "ACK" in the response packet is set to 1. In other words, a value of "ACK" is 1. Optionally, the receiver replies with the response packet to the transmitter in a unicast manner, so that fewer packets are sent. It should be understood that, if the value of "ACK" in the broadcast header is 1, it indicates that a packet including the broadcast header is a response packet for the broadcast packet (or the multicast packet).

The field "reserved" is reserved for use in subsequent extension. A value of each bit in "reserved" may be initialized to 0.

The field "alive time" is maximum alive time of a broadcast packet in a network, where a unit is second (s). For example, default maximum alive time is 30s. The field "alive time" in the broadcast header is configurable. Optionally, initial "alive time", namely, "alive time" in the packet sent by the source node, is specified by the source node as required. Before the packet (the broadcast packet or the multicast packet) is forwarded by an intermediate node, corresponding local processing time, namely, time for processing the packet by the intermediate node, needs to be deducted from "alive time". For example, a specific intermediate node receives a broadcast packet 2, and "alive time" in the broadcast packet 2 is equal to 20s, in other words, "alive time" is 20s. Time for processing the broadcast packet 2 by the intermediate node is 2s, in other words, local processing time is 2s. After deducting 2s from "alive time" in the broadcast packet 2, the intermediate node forwards the broadcast packet 2 to a neighboring node of the intermediate node. In this example, "alive time" in the broadcast packet 2 forwarded by the intermediate node is equal to 18s, in other words, "alive time" is 18s. When the local processing time that needs to be deducted from "alive time" in the packet is greater than "alive time", alive time of the packet expires, and the intermediate node may not forward the packet. For example, a specific intermediate node receives the broadcast packet 2, and "alive time" in the broadcast packet 2 is equal to 1s, in other words, "alive time" is 1s. Time for processing the broadcast packet 2 by the intermediate node is 2s, in other words, local processing time is 2s; and the intermediate node does not forward the broadcast packet 2. In the response packet, "alive time" may be calculated based on an actual situation. That is, corresponding local processing time is deducted from "alive time"; or "alive time" may be directly set to 0. This is not limited in this application.

The field "sequence number" is a sequence number of a broadcast packet (or a multicast packet). Optionally, each time a broadcast packet generator (or a source node) sends a packet, a sequence number is increased by 1. The sequence number is used to distinguish between broadcast packets, and no comparison is performed between an old packet and a new packet.

The foregoing describes the broadcast header provided in embodiments of this application. The following describes the assembly manner of the broadcast header in the wireless network packet. The assembly manner may be referred to as a generation manner.

It is assumed that the node A is a source node that generates a packet. An example of generating a broadcast packet (or a multicast packet) by the node A is described as follows: constructing a basic header of a network layer; adding a broadcast header following the basic header; and adding another extension header and an upper-layer header that follow the broadcast header, and then adding "payload".

The basic header (basic header) of the network layer may include the following fields: "next header", "source address", and "destination address". The field "next header" points to the broadcast header. The field "source address" is a unicast address of the local node (namely, the node A), for example, 100.1. The field "destination address" may be a broadcast address in which broadcast is performed within a wireless network range, or may be a multicast address. For example, if "destination address" is 255.255, it indicates that a packet is broadcast within the wireless network range. For another example, "destination address" is 128.1, "destination address" indicates a multicast address.

The broadcast header may include the following fields: "next header", "type", "ACK", and "alive time". The field "next header" points to another extension header following the broadcast header. When "type"=0, in other words, when a value of "type" is 0, it indicates that the broadcast packet corresponds to normal reliable broadcast. When "type"=1, in other words, when a value of "type" is 1, it indicates that the broadcast packet corresponds to improved reliable broadcast. The field "ACK" is used only when "type"=1. The field "ACK" in the broadcast packet is equal to 0, in other words, a value of "ACK" is 0. The field "ACK" in a response packet in the broadcast packet is equal to 1, in other words, a value of "ACK" is 1. Alternatively, when "type"=0, in other words, when a value of "type" is 0, it indicates that a multicast packet corresponds to normal reliable multicast. When "type"=1, in other words, when a value of "type" is 1, it indicates that a multicast packet corresponds to improved reliable multicast. The field "ACK" is used only when "type"=1. The field "ACK" in the multicast packet is equal to 0, in other words, a value of "ACK" is 0. The field "ACK" in a response packet in the multicast packet is equal to 1, in other words, a value of "ACK" is 1. For meanings of fields in the broadcast header, refer to the foregoing description. Details are not described herein again. The node A maintains local "sequence number" (for example, an initial value is 0). Each time a broadcast packet is sent, "sequence number" in the broadcast packet is increased by 1. The sequence number is used to only distinguish between different packets, and is not related to old and new versions of the packets. Optionally, "sequence number" occupies four bytes. After "sequence number" reaches a maximum value, "sequence number" may start from 0 again.

In a possible implementation, the broadcast packet (or the multicast packet) generated by the node A is not fragmented, and is managed by an upper-layer application. In this way, a packet reassembly burden of the node can be reduced. Optionally, the broadcast packet (or the multicast packet) is not fragmented on the source node, the intermediate node, and the destination node. When an extremely large amount of information is carried, a plurality of broadcast packets may be used in an application layer protocol to carry the information. An objective of such an operation is to reduce a reassembly burden on network nodes because packet reassembly is time-consuming.

The foregoing describes the broadcast header provided in embodiments of this application and the assembly manner of the broadcast header in the wireless network packet. A communication solution provided in embodiments of this application is described below with reference to the accompanying drawings.

FIG. 2 is an interaction flowchart of a communication method according to an embodiment of this application. As shown in FIG. 2, the method includes the following steps.

201: A second device generates a first packet.

A first field in the first packet indicates that a type of the first packet is a first type or a second type, the first type corresponds to normal reliable broadcast, and the second type corresponds to improved reliable broadcast. Alternatively, the first type corresponds to normal reliable multicast, and the second type corresponds to improved reliable multicast. The first field may be "type" in Table 1. The second device may be a source node in a wireless network, for example, the node A in FIG. 1. Alternatively, the second device is any node that generates and sends a broadcast packet (or a multicast packet) in a wireless network. Optionally, the first packet further includes a second field. If the first field in the first packet indicates that the type of the first packet is the second type, the second field in the first packet is used by the first device to make a response. The second field may be "ACK" in Table 1. The second device may generate the broadcast packet or the multicast packet of the first type or of the second type based on a reliability requirement on a to-be-sent packet. For example, when the reliability requirement on the to-be-sent packet is low, the second device generates the broadcast packet or the multicast packet of the first type; or when the reliability requirement on the to-be-sent packet is high, the second device generates the broadcast packet or the multicast packet of the second type.

In a possible implementation, a reliability requirement of the improved reliable broadcast on the broadcast packet is higher than a reliability requirement of the normal reliable broadcast on the broadcast packet, or a reliability requirement of the improved reliable multicast on the multicast packet is higher than a reliability requirement of the normal reliable multicast on the multicast packet. In this implementation, the type of the first packet is the first type or the second type, and the first packet may meet different reliability requirements.

In a possible implementation, the improved reliable broadcast requires a device to respond to, for the received broadcast packet, a device that sends the broadcast packet, for example, to reply with a response packet, and the normal reliable broadcast does not require a device to respond to, for the received broadcast packet, a device that sends the broadcast packet. Alternatively, the improved reliable multicast requires a device to respond to, for the received multicast packet, a device that sends the multicast packet, and the normal reliable multicast does not require a device to respond to, for the received multicast packet, a device that sends the multicast packet. For example, the second device is the node A in FIG. 1. The node A generates and sends the first packet to the node B. If the type of the first packet is the first type, the normal reliable broadcast corresponding to the first type does not require the node B to respond to the node A for the first packet; or if the type of the first packet is the second type, the improved reliable broadcast corresponding to the second type requires the node B to respond to the node A for the first packet. It may be understood that if the first field in the first packet indicates that the type of the first packet is the first type, the node that receives the first packet does not need to respond to the second device for the first packet; or if the first field in the first packet indicates that the type of the first packet is the first type, the node that receives the first packet does not need to respond to the second device for the first packet; or if the first field in the first packet indicates that the type of the first packet is the second type, the node that receives the first packet needs to respond to the second device for the first packet. In this implementation, the improved reliable broadcast requires the device to respond to, for the received broadcast packet, the device that sends the broadcast packet, to determine whether the first packet is successfully received. This can enhance reliability. The normal reliable broadcast does not require the device to respond to, for the received broadcast packet, the device that sends the broadcast packet, so that fewer packets can be sent, and resource overheads can be reduced. The improved reliable multicast requires the device to respond to, for the received multicast packet, the device that sends the multicast packet, to determine whether the first packet is successfully received. This can enhance reliability. The normal reliable multicast does not require the device to respond to, for the received multicast packet, the device that sends the multicast packet, so that fewer packets can be sent, and resource overheads can be reduced.

In a possible implementation, the first packet further includes a third field. The third field in the first packet indicates first alive time of the first packet in a network. The third field may be "alive time" in Table 1. In this implementation, the third field in the first packet indicates the first alive time of the first packet in the network, so that the first packet transmitted in the network disappears at an approximately same time point. This can reduce transmission of an invalid packet in the network.

In a possible implementation, the first packet further includes a sequence number. The sequence number indicates a serial number of the first packet. The sequence number may be "sequence number" in Table 1. In this implementation, the sequence number indicates the serial number of the first packet, so that the device that receives the first packet determines, by using the serial number, whether the first packet is a duplicate packet.

In a possible implementation, the first field, the second field, the third field, and the sequence number are included in a broadcast header (broadcast header). Optionally, the broadcast header further includes a reserved ("reserved") field and a fourth field. The fourth field indicates a type of a next header. The fourth field may be "next header" in Table 1. Table 1 is an example of the broadcast header in the first packet. Optionally, the first packet further includes a basic header of a network layer. The first packet may further include another extension header and an upper-layer header. In this implementation, the first field, the second field, and the third field are included in the broadcast header, so that a packet that can meet different reliability requirements can be conveniently generated.

In a possible implementation, the third field in the first packet indicates the first alive time of the first packet in the network. The method further includes: locally caching the first packet for storage; and deleting the first packet after time for locally caching the first packet for storage exceeds the first alive time. In this implementation, the first packet is deleted after the time for locally caching the first packet for storage exceeds the first alive time, so that an occupied cache resource can be released in time.

202: The second device sends the first packet to the first device.

Correspondingly, the second device receives the first packet from the first device. The first device may be understood as a neighboring node of the second device. That the second device sends the first packet to the first device may be that the second device sends the first packet to one or more neighboring nodes of the second device, where the one or more neighboring nodes include the first device. An interaction procedure in FIG. 2 is described by using the first device and the second device as an example. It should be understood that operations performed by the neighboring nodes of the second device are similar, and details are not described herein again. The first device may be considered as a source node in one time of broadcast communication (or multicast communication), and the second device may be considered as a forwarding node in the time of broadcast communication (or multicast communication). It should be understood that operations performed by forwarding nodes in the wireless network are similar. Therefore, the operations performed by the forwarding nodes are described herein by using the second device as an example. It should be noted that, a difference between a destination node and a forwarding node in the wireless network lies only in that the destination node does not forward a received packet. An operation performed by the destination node is not separately described herein.

203: The first device processes the first packet based on the type of the first packet.

In a possible implementation, the third field in the first packet indicates the first alive time of the first packet in the network; and after receiving the first packet, the first device locally caches the first packet for the first alive time. The locally caching the first packet for the first alive time may be understood as: locally caching the first packet for storage; and deleting the first packet after the time for locally caching the first packet for storage exceeds the first alive time. Optionally, the first device locally caches digest information of the first packet for fourth alive time, where the fourth alive time is longer than the first alive time. The digest information of the first packet may include a combination of a source address and the sequence number that are in the first packet. Optionally, after receiving the first packet from the second device, the first device first determines whether the first packet is a duplicate packet. If the first packet is the duplicate packet, the first packet is discarded; or if the first packet is not the duplicate packet, the first packet is locally cached for the first alive time. In this implementation, the first packet is locally cached for the first alive time, so that an occupied cache resource can be released in time.

A possible implementation of step 203 is as follows: when the type of the first packet is the second type, sending a second packet in response to the first packet to the second device, and adding the first packet to a packet sending queue of a first neighboring node. The first neighboring node is the one or more neighboring nodes of the first device. A first field in the second packet indicates that a type of the second packet is the second type, and a second field in the second packet indicates that the first device successfully receives the first packet. For example, the first field ("type") in the first packet indicates the second type, and the second field ("ACK") in the first packet is 0. The first field ("type") in the second packet indicates the second type, the second field ("ACK") in the second packet is 1, and the second field in the second packet indicates that the first device successfully receives the first packet.

After adding the first packet to the packet sending queue of the first neighboring node, the first device may further perform the following operations: sending the first packet to the first neighboring node; and after receiving a fourth packet that is from the first neighboring node and that is in response to the first packet, deleting the first packet from the packet sending queue of the first neighboring node. A first field in the fourth packet indicates that a type of the fourth packet is the second type, and a second field in the fourth packet indicates that the first neighboring node successfully receives the first packet. The fourth packet is similar to the second packet, and details are not described herein again. A third field in the first packet sent by the first device to the first neighboring node indicates third alive time of the first packet in the network, and the third field in the first packet from the second device indicates the first alive time of the first packet in the network. The third alive time is shorter than or equal to the first alive time. For example, the third alive time is equal to the first alive time minus time for processing the first packet by the first device. Because precision of the alive time that may be indicated by the third field is limited, the third alive time may be equal to the first alive time. In a possible implementation, when the first device does not receive a response packet from the first neighboring node for the first packet in first waiting time after sending the first packet to the first neighboring node, the first device retransmits the first packet to the first neighboring node. If the first device always does not receive the response packet from the first neighboring node for the first packet, the first device may attempt to retransmit the first packet a plurality of times, for example, retransmit the first packet once every the first waiting time, until the response packet from the first neighboring node for the first packet is received or a local cache life cycle of the first packet ends. That the local cache life cycle of the first packet ends means that duration for caching the first packet by the first device reaches the first alive time. Alive time indicated by the third field ("alive time") in the first packet sent by the first device to the first neighboring node for the first time is shorter than alive time indicated by the third field in the first packet retransmitted by the first device to the first neighboring node. For example, the alive time indicated by the third field in the first packet sent by the first device to the first neighboring node for the first time is 10s, alive time indicated by the third field in the first packet retransmitted by the first device to the first neighboring node for the first time is (10-t)s, alive time indicated by the third field in the first packet retransmitted by the first device to the first neighboring node for the second time is (10-2t)s, and the rest may be deduced by analogy. Retransmission is performed until the response packet from the first neighboring node for the first packet is received or the local cache life cycle of the first packet ends. Herein, t indicates the first waiting time, and t may be flexibly configured. This is not limited in this application.

In a possible implementation, the second type corresponds to the improved reliable multicast, and a destination address in the first packet is a multicast address. The first device may further perform the following operations: when the multicast address in the first packet is monitored, sending the first packet to a control plane program or an application for processing, and forwarding the first packet to the first neighboring node; or when the multicast address in the first packet is not monitored, forwarding the first packet to the first neighboring node. In this implementation, corresponding processing is performed based on whether the multicast address in the first packet is monitored, so that a multicast packet monitored by the first device can be sent to the control plane program or the application for processing, and a multicast packet that is not concerned by the first device can be forwarded.

A possible implementation of step 203 is as follows: when the type of the first packet is the first type, adding the first packet to a packet sending queue of a first neighboring node; and sending the first packet to the first neighboring node. A third field in the first packet sent to the first neighboring node indicates third alive time of the first packet in the network, and the third field in the first packet from the second device indicates the first alive time of the first packet in the network. The third alive time is shorter than or equal to the first alive time. In this implementation, the third alive time is shorter than or equal to the first alive time, so that the first packet transmitted in the network disappears at an approximately same time point. This can reduce transmission of an invalid packet in the network.

A possible implementation of step 203 is as follows: when the type of the first packet is the first type, adding the first packet to a packet sending queue of a first neighboring node; before the first packet is sent to the first neighboring node, determining sixth alive time, where the sixth alive time is equal to the first alive time minus local processing time, and the local processing time is time for processing the first packet by the first device; and when the sixth alive time is less than 0, canceling sending the first packet to the first neighboring node. In this implementation, when the sixth alive time is less than 0, the first device cancels sending the first packet to the first neighboring node, so that fewer invalid first packets can be sent.

In embodiments of this application, the type of the first packet is the first type or the second type, so that the first packet can meet different reliability requirements, and resource overheads are reduced.

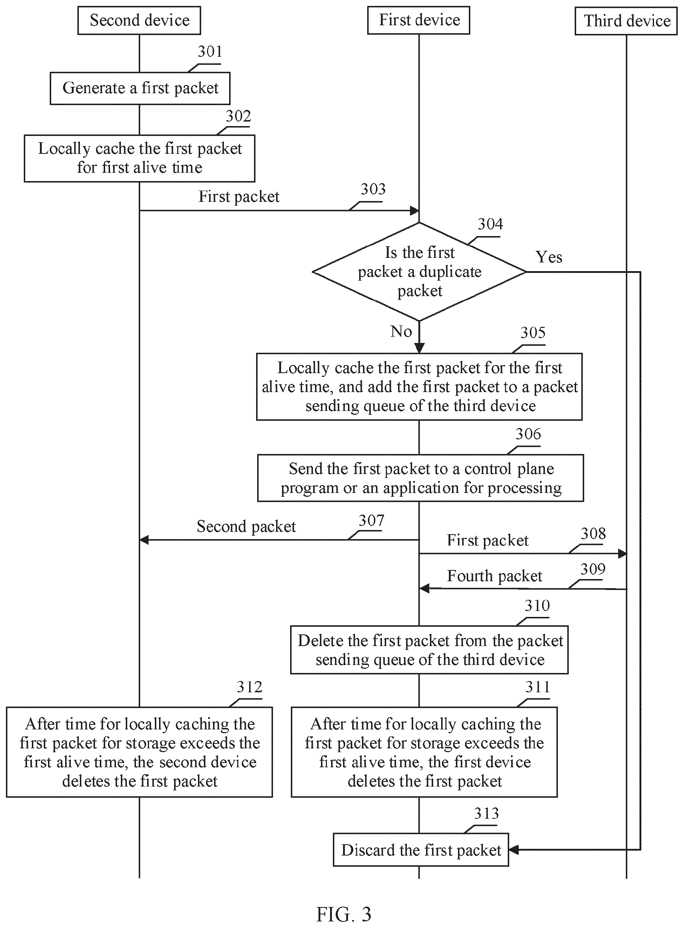

FIG. 3 is a schematic interaction diagram of another broadcast communication method according to an embodiment of this application. A method procedure in FIG. 3 is a possible implementation of the method described in FIG. 2. In this implementation, after receiving a first packet (a broadcast packet) from a second device, a first device sends a response packet to the second device for the first packet. This can improve reliability of the packet. As shown in FIG. 3, the method includes the following steps.

301: The second device generates the first packet.

For a manner in which the second device generates the first packet, refer to the foregoing example in which the node A generates the broadcast packet. A first field in the first packet indicates that a type of the first packet is a second type. The second type corresponds to improved reliable broadcast. In FIG. 3, a broadcast packet transmission process is described by using the node A, the node B, and the node C in FIG. 1 as an example. The node A indicates the second device, the node B indicates the first device, and the node C indicates a third device. It may be understood that the node A is an example of a source node, and the node B and the node C are examples of intermediate nodes. Because operations performed by the intermediate nodes are similar to each other, an operation performed by only the node B (namely, the first device) is described herein.

The first packet further includes a second field. If the first field in the first packet indicates that the type of the first packet is the second type, the second field in the first packet is used by the first device to make a response. The first packet further includes a third field. The third field in the first packet indicates first alive time of the first packet in a network.

302: The second device locally caches the first packet for the first alive time.

303: The second device sends the first packet to the first device.

Correspondingly, the first device receives the first packet from the second device. A sequence of step 303 and step 302 is not limited.

304: The first device determines whether the first packet from the second device is a duplicate packet.

If the first packet from the second device is not the duplicate packet, step 305 is performed; or if the first packet from the second device is the duplicate packet, step 313 is performed. There are three possible processing manners for the first device to determine whether the first packet from the second device is the duplicate packet. Manner 1: If the first packet is a new packet, the first packet is locally cached for the first alive time, and the first packet is added to a packet sending queue of the third device. Manner 2: If the first packet is a new packet, but a local cache is insufficient, different processing policies may be used. Two options are provided herein: (1) directly discard, and wait for retransmission by the second device; and (2) first age one packet that has been forwarded and that has been locally cached for longest time, and then cache the first packet. Manner 3: If the first packet is the duplicate packet, the first packet is directly discarded. Manner 1 and Manner 2 herein are two possible implementations of the following step 305. Manner 3 is the following step 313.

A possible implementation of step 304 is as follows: The first device determines, based on a source address and a sequence number that are in the first packet, whether the first packet is the duplicate packet. Optionally, the first device uses a combination of the source address and the sequence number in the first packet as an index of the first packet, and determines, by searching whether the combination of the source address and the sequence number in the first packet is locally cached, whether the first packet is the duplicate packet. If the combination of the source address and the sequence number in the first packet, namely, the index of the first packet, is locally cached, the first device determines that the first packet is the duplicate packet; or if the combination of the source address and the sequence number in the first packet is not locally cached, the first device determines that the first packet is a new packet, namely, a non-duplicate packet. After receiving any packet, the first device may cache the any packet and an index of the any packet, namely, a combination of a source address and a sequence number in the any packet.

305: The first device locally caches the first packet for the first alive time, and adds the first packet to the packet sending queue of the third device.

The third device is a neighboring node of the first device. It should be understood that the first device may add the first packet to a packet sending queue of each neighboring node (other than the second device) of the first device. Herein, only the third device is used as an example.

In a possible implementation, the first device locally caches digest information of the first packet for fourth alive time. The fourth alive time is longer than the first alive time. Optionally, the fourth alive time is equal to the first alive time plus preset duration, for example, 20s or 10s. The digest information of the packet is extracted locally, for example, is indicated by an index of the packet, namely, (source address+sequence number), namely, the source address+the sequence number. In this implementation, the fourth alive time is longer than the first alive time. This can avoid a problem that whether the first packet is the duplicate packet cannot be determined when the first packet is received from another neighbor after the first packet is aged.

In a possible implementation, in a process of locally caching the first packet for storage, if the first device finds a new neighboring node, the first device adds the first packet to a sending queue of the new neighboring node. In this implementation, the first packet may be forwarded to the new neighboring node.

306: The first device sends the first packet to a control plane program or an application for processing.

307: The first device sends a second packet in response to the first packet to the second device.

Correspondingly, the second device receives the second packet that is in response to the first packet and that is sent by the second device. A first field in the second packet indicates that a type of the second packet is the second type, and a second field in the second packet indicates that the first device successfully receives the first packet. A sequence of step 305, step 306, and step 307 is not limited.

Step 307 may be replaced with the following: When the second device does not receive a response from the first device for the first packet, the second device determines that a fault occurs on a communication link between the second device and the first device. In this way, the link fault can be detected more quickly.

308: The first device forwards the first packet to the third device.

A third field in the first packet forwarded by the first device to the third device indicates third alive time of the first packet in the network, the third field in the first packet from the second device indicates the first alive time of the first packet in the network, and the third alive time is shorter than or equal to the first alive time.

In a possible implementation, before forwarding the first packet to the third device, the first device performs the following operations: determining sixth alive time, where the sixth alive time is equal to the first alive time minus local processing time, and the local processing time is time for processing the first packet by the first device; and when the sixth alive time is less than 0, canceling forwarding the first packet to the third device. In this implementation, when the sixth alive time is less than 0, the first device cancels sending the first packet to the first neighboring node, so that fewer invalid first packets can be sent.

In a possible implementation, when the first device does not receive a response packet from the third device for the first packet in first waiting time after forwarding the first packet to the third device, the first device retransmits the first packet to the third device. If the first device always does not receive the response packet from the third device for the first packet, the first device may attempt to retransmit the first packet a plurality of times, for example, retransmit the first packet once every the first waiting time, until the response packet from the third device for the first packet is received or a local cache life cycle of the first packet ends.

309: The third device sends a fourth packet in response to the first packet to the first device.

Correspondingly, the first device receives the fourth packet that is from the third device and that is in response to the first packet. A first field in the fourth packet indicates that a type of the fourth packet is the second type, and a second field in the fourth packet indicates that the third device successfully receives the first packet.

310: The first device deletes the first packet from the packet sending queue of the third device.

Step 309 and step 310 may be replaced with the following: If the local cache life cycle of the first packet ends, and the first device does not receive the response packet from the third device for the first packet, the first device deletes the cached first packet, and clears an unsuccessfully sent first packet from the packet sending queue of the third device, that is, stops retransmitting the first packet. Optionally, if the local cache life cycle of the first packet ends, and the first device does not receive the response packet from the third device for the first packet, the first device determines that a fault occurs on a communication link between the first device and the third device.

311: After time for locally caching the first packet for storage exceeds the first alive time, the first device deletes the first packet.

Optionally, after time for locally caching the digest information of the first packet for storage exceeds the fourth alive time, the digest information of the first packet is deleted.

312: After time for locally caching the first packet for storage exceeds the first alive time, the second device deletes the first packet.

313: The first device discards the first packet.

The type of the first packet is the second type, and the second type corresponds to the improved reliable broadcast. After sending the first packet to a neighboring node of any node, the any node may determine, based on whether the neighboring node of the any node makes a response for the first packet, whether a fault occurs on a communication link between the any node and the neighboring node. In this way, the faulty communication link can be detected more quickly, and then reliability of the packet is improved.

In this embodiment of this application, after receiving the first packet (the broadcast packet) from the second device, the first device sends the response packet to the second device for the first packet. This can improve reliability of the broadcast packet.

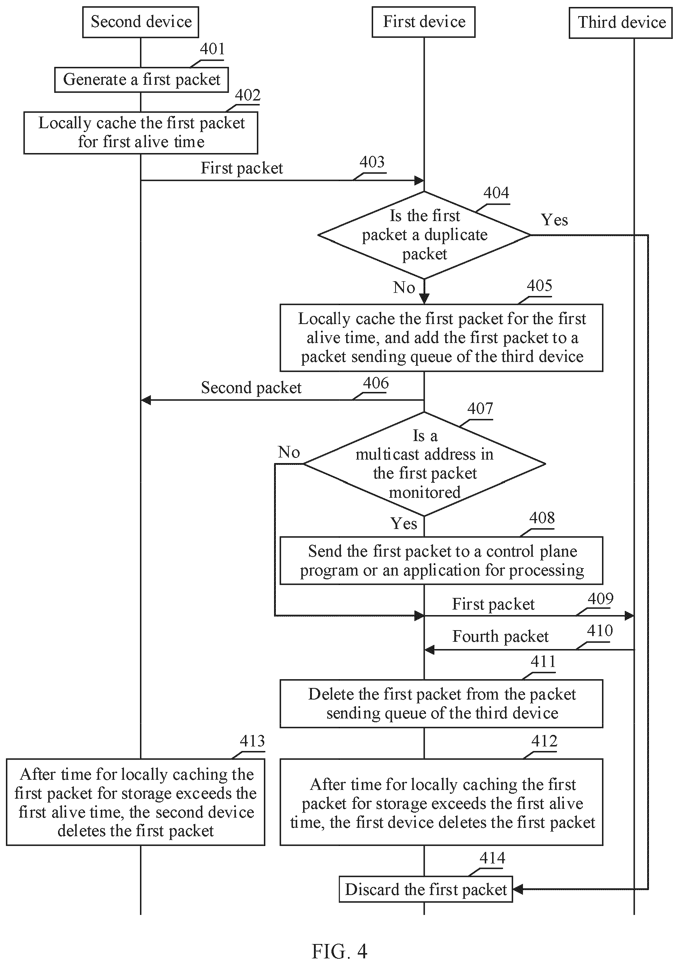

FIG. 4 is a schematic interaction diagram of a multicast communication method according to an embodiment of this application. A method procedure in FIG. 4 is a possible implementation of the method described in FIG. 2. In this implementation, after receiving a first packet (a multicast packet) from a second device, a first device sends a response packet to the second device for the first packet. This can improve reliability of the packet. As shown in FIG. 4, the method includes the following steps.

401: The second device generates the first packet.

For a manner in which the second device generates the first packet, refer to the foregoing example in which the node A generates the broadcast packet. A first field in the first packet indicates that a type of the first packet is a second type. The second type corresponds to improved reliable multicast. A destination address in the first packet is a multicast address. In FIG. 4, a multicast packet transmission process is described by using the node A, the node B, and the node C in FIG. 1 as an example. The node A indicates the second device, the node B indicates the first device, and the node C indicates a third device. It may be understood that the node A is an example of a source node, and the node B and the node C are examples of intermediate nodes. Because operations performed by the intermediate nodes are similar to each other, an operation performed by only the node B (namely, the first device) is described herein.

The first packet further includes a second field. If the first field in the first packet indicates that the type of the first packet is the second type, the second field in the first packet is used by the first device to make a response. The first packet further includes a third field. The third field in the first packet indicates first alive time of the first packet in a network.

402: The second device locally caches the first packet for the first alive time.

403: The second device sends the first packet to the first device.

Correspondingly, the first device receives the first packet from the second device.

404: The first device determines whether the first packet from the second device is a duplicate packet.

If the first packet from the second device is not the duplicate packet, step 405 is performed; or if the first packet from the second device is the duplicate packet, step 414 is performed. For step 404, refer to step 304.

405: The first device locally caches the first packet for the first alive time, and adds the first packet to a packet sending queue of the third device.

The third device is a neighboring node of the first device. It should be understood that the first device may add the first packet to a packet sending queue of each neighboring node (other than the second device) of the first device. Herein, only the third device is used as an example.

In a possible implementation, the first device locally caches digest information of the first packet for fourth alive time. The fourth alive time is longer than the first alive time. Optionally, the fourth alive time is equal to the first alive time plus preset duration, for example, 20s or 10s. The digest information of the packet is extracted locally, for example, is indicated by an index of the packet, namely, (source address+sequence number), namely, the source address+the sequence number. In this implementation, the fourth alive time is longer than the first alive time. This can avoid a problem that whether the first packet is the duplicate packet cannot be determined when the first packet is received from another neighbor after the first packet is aged.

In a possible implementation, in a process of locally caching the first packet for storage, if the first device finds a new neighboring node, the first device adds the first packet to a sending queue of the new neighboring node. In this implementation, the first packet may be forwarded to the new neighboring node.

406: The first device sends a second packet in response to the first packet to the second device.

Correspondingly, the second device receives the second packet that is in response to the first packet and that is sent by the second device. A first field in the second packet indicates that a type of the second packet is the second type, and a second field in the second packet indicates that the first device successfully receives the first packet. A sequence of step 405 and step 406 is not limited.

Step 406 may be replaced with the following: When the second device does not receive a response from the first device for the first packet, the second device determines that a fault occurs on a communication link between the second device and the first device. In this way, the link fault can be detected more quickly.

407: The first device determines whether to monitor the multicast address in the first packet.

If the first device determines to monitor the multicast address in the first packet, step 408 is performed; or if the first device determines not to monitor the multicast address in the first packet, step 409 is performed. For a multicast packet, only a node that monitors the multicast address of the multicast packet sends the multicast packet to a control plane program or an application. If the first device does not monitor the multicast address in the first packet, the first device does not process the first packet. That is, the first device does not send the first packet to the control plane program or the application for processing, but forwards the first packet only to the neighboring node of the first device. A sequence of step 407 and step 406 is not limited.

408: The first device sends the first packet to the control plane program or the application for processing.

409: The first device forwards the first packet to the third device.

A third field in the first packet forwarded by the first device to the third device indicates third alive time of the first packet in the network, the third field in the first packet from the second device indicates the first alive time of the first packet in the network, and the third alive time is shorter than or equal to the first alive time. For step 409, refer to step 308.

410: The third device sends a fourth packet in response to the first packet to the first device.

Correspondingly, the first device receives the fourth packet that is from the third device and that is in response to the first packet. A first field in the fourth packet indicates that a type of the fourth packet is the second type, and a second field in the fourth packet indicates that the third device successfully receives the first packet.

411: The first device deletes the first packet from the packet sending queue of the third device.

Step 410 and step 411 may be replaced with the following: If the local cache life cycle of the first packet ends, and the first device does not receive the response packet from the third device for the first packet, the first device deletes the cached first packet, and clears an unsuccessfully sent first packet from the packet sending queue of the third device, that is, stops retransmitting the first packet. Optionally, if the local cache life cycle of the first packet ends, and the first device does not receive the response packet from the third device for the first packet, the first device determines that a fault occurs on a communication link between the first device and the third device.

412: After time for locally caching the first packet for storage exceeds the first alive time, the first device deletes the first packet.

Optionally, after time for locally caching the digest information of the first packet for storage exceeds the fourth alive time, the digest information of the first packet is deleted.

413: After time for locally caching the first packet for storage exceeds the first alive time, the second device deletes the first packet.

414: The first device discards the first packet.

In this embodiment of this application, after receiving the first packet (the multicast packet) from the second device, the first device sends the response packet to the second device for the first packet. This can improve reliability of the broadcast packet.

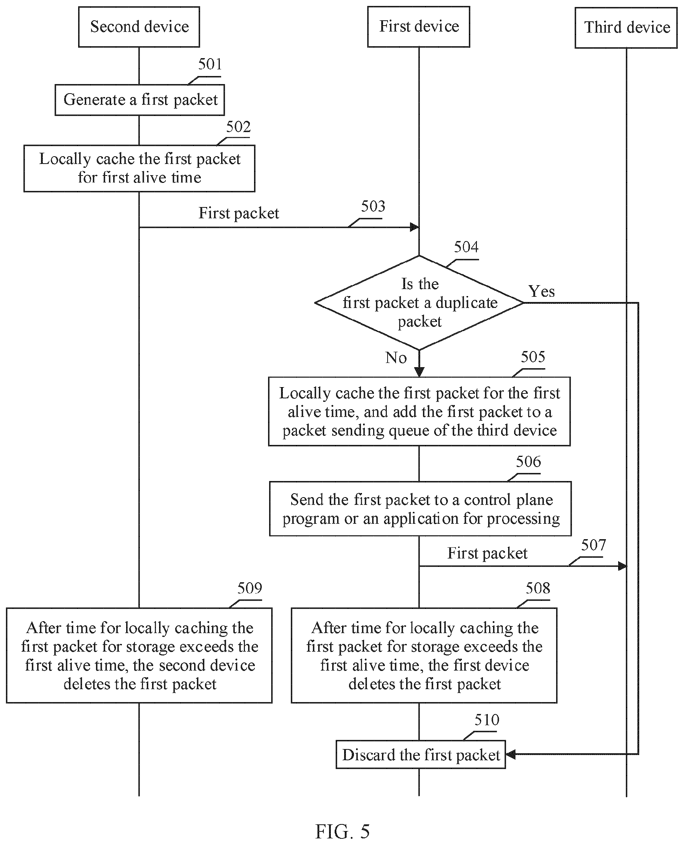

FIG. 5 is a schematic interaction diagram of another broadcast communication method according to an embodiment of this application. A method procedure in FIG. 5 is a possible implementation of the method described in FIG. 2. In this implementation, after receiving a first packet (a broadcast packet) from a second device, a first device does not need to respond to the second device for the first packet, so that packet transmission can be reduced, and an invalid packet in a network can be reduced. As shown in FIG. 5, the method includes the following steps.

501: The second device generates the first packet.

For a manner in which the second device generates the first packet, refer to the foregoing example in which the node A generates the broadcast packet. A first field in the first packet indicates that a type of the first packet is a first type. The first type corresponds to normal reliable broadcast. In FIG. 3, a broadcast packet transmission process is described by using the node A, the node B, and the node C in FIG. 1 as an example. The node A indicates the second device, the node B indicates the first device, and the node C indicates a third device. It may be understood that the node A is an example of a source node, and the node B and the node C are examples of intermediate nodes. Because operations performed by the intermediate nodes are similar to each other, an operation performed by only the node B (namely, the first device) is described herein.

502: The second device locally caches the first packet for first alive time.

The first packet further includes a third field. The third field in the first packet indicates the first alive time of the first packet in a network.

503: The second device sends the first packet to the first device.

Correspondingly, the first device receives the first packet from the second device.

504: The first device determines whether the first packet from the second device is a duplicate packet.

If the first packet from the second device is not the duplicate packet, step 505 is performed; or if the first packet from the second device is the duplicate packet, step 510 is performed. For step 504, refer to step 304.

505: The first device locally caches the first packet for the first alive time, and adds the first packet to a packet sending queue of the third device.

For step 505, refer to step 305.

506: The first device sends the first packet to a control plane program or an application for processing.

A sequence of step 306 and step 307 is not limited.

507: The first device forwards the first packet to the third device.

Optionally, the first device deletes the first packet from the packet sending queue of the third device. A third field in the first packet forwarded by the first device to the third device indicates third alive time of the first packet in the network, the third field in the first packet from the second device indicates the first alive time of the first packet in the network, and the third alive time is shorter than or equal to the first alive time. For step 507, refer to step 308. Optionally, the first device forwards the first packet to the third device, and immediately (for example, within 1s) deletes the first packet from the packet sending queue of the third device.

508: After time for locally caching the first packet for storage exceeds the first alive time, the first device deletes the first packet.

Optionally, after time for locally caching the digest information of the first packet for storage exceeds the fourth alive time, the digest information of the first packet is deleted.

509: After time for locally caching the first packet for storage exceeds the first alive time, the second device deletes the first packet.

510: The first device discards the first packet.

In this embodiment of this application, after receiving the first packet (a broadcast packet) from the second device, the first device does not need to respond to the second device for the first packet, so that packet transmission can be reduced, and an invalid packet in the network can be reduced.

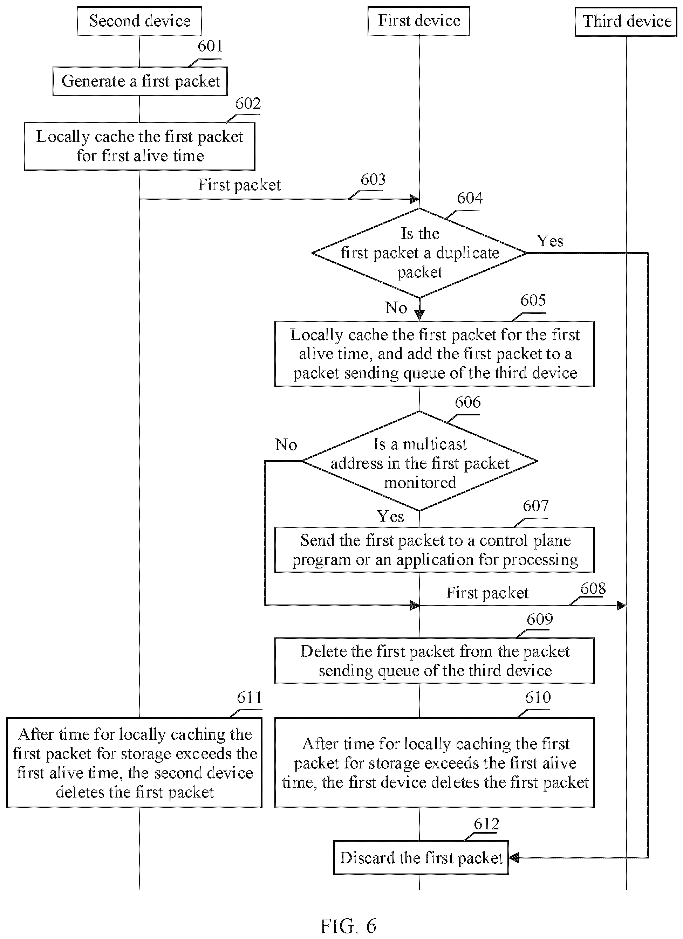

FIG. 6 is a schematic interaction diagram of another multicast communication method according to an embodiment of this application. A method procedure in FIG. 6 is a possible implementation of the method described in FIG. 2. In this implementation, after receiving a first packet (the multicast packet) from a second device, a first device does not need to respond to the second device for the first packet, so that packet transmission can be reduced, and an invalid packet in a network can be reduced. As shown in FIG. 6, the method includes the following steps.

601: The second device generates the first packet.

For a manner in which the second device generates the first packet, refer to the foregoing example in which the node A generates the broadcast packet. A first field in the first packet indicates that a type of the first packet is a first type. The first type corresponds to normal reliable multicast. A destination address in the first packet is a multicast address. In FIG. 4, a multicast packet transmission process is described by using the node A, the node B, and the node C in FIG. 1 as an example. The node A indicates the second device, the node B indicates the first device, and the node C indicates a third device. It may be understood that the node A is an example of a source node, and the node B and the node C are examples of intermediate nodes. Because operations performed by the intermediate nodes are similar to each other, an operation performed by only the node B (namely, the first device) is described herein.

602: The second device locally caches the first packet for first alive time.

The first packet further includes a third field. The third field in the first packet indicates first alive time of the first packet in a network.

603: The second device sends the first packet to the first device.

Correspondingly, the first device receives the first packet from the second device.

604: The first device determines whether the first packet from the second device is a duplicate packet.

If the first packet from the second device is not the duplicate packet, step 605 is performed; or if the first packet from the second device is the duplicate packet, step 612 is performed. For step 604, refer to step 404.

605: The first device locally caches the first packet for the first alive time, and adds the first packet to a packet sending queue of the third device.

The third device is a neighboring node of the first device. It should be understood that the first device may add the first packet to a packet sending queue of each neighboring node (other than the second device) of the first device. Herein, only the third device is used as an example. For step 605, refer to step 405.

606: The first device determines whether to monitor the multicast address in the first packet.

If the first device determines to monitor the multicast address in the first packet, step 607 is performed; or if the first device determines not to monitor the multicast address in the first packet, step 608 is performed. For step 606, refer to step 407.

607: The first device sends the first packet to a control plane program or an application for processing.

608: The first device forwards the first packet to the third device.

For step 608, refer to step 308. Correspondingly, the third device receives the first packet from the first device. The third device may perform an operation similar to that of the first device, and details are not described herein again.

609: The first device deletes the first packet from the packet sending queue of the third device.

610: After time for locally caching the first packet for storage exceeds the first alive time, the first device deletes the first packet.

Optionally, after time for locally caching the digest information of the first packet for storage exceeds the fourth alive time, the digest information of the first packet is deleted.

611: After time for locally caching the first packet for storage exceeds the first alive time, the second device deletes the first packet.

612: The first device discards the first packet.

In this embodiment of this application, after receiving the first packet (the multicast packet) from the second device, the first device does not need to respond to the second device for the first packet, so that packet transmission can be reduced, and an invalid packet in the network can be reduced.

The following separately describes an example of an improved reliable broadcast procedure (corresponding to the procedure in FIG. 3), an example of an improved reliable multicast procedure (corresponding to the procedure in FIG. 4), an example of a normal reliable broadcast procedure (corresponding to the process in FIG. 5), and an example of a normal reliable multicast procedure (corresponding to the procedure in FIG. 6) with reference to the accompanying drawings.

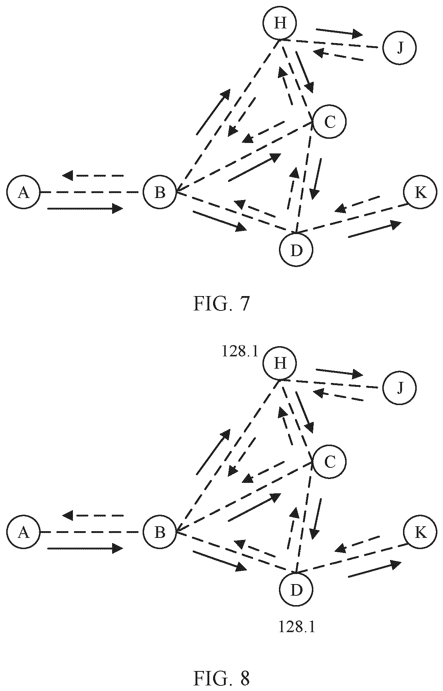

FIG. 7 shows an example of an improved reliable broadcast transmission process according to an embodiment of this application. In FIG. 7, a node A is a source node, a node B, a node C, a node D, and a node H are intermediate nodes, and a node J and a node K are destination nodes. A dashed line between two nodes indicates a communication link between the two nodes. One arrow between two nodes indicates a flow direction of a broadcast packet, and the other arrow indicates a flow direction of a response packet for the broadcast packet.

Operations performed by the nodes in the improved reliable broadcast transmission process shown in FIG. 7 are described below.
(1) The node A sends a broadcast packet P.
The broadcast packet P may be understood as the foregoing first packet. A first field ("type") in the broadcast packet P indicates a second type, and the second type corresponds to improved reliable broadcast. Table 2 shows an example of the broadcast packet P. In other words, Table 2 shows an example of an improved reliable broadcast packet. As shown in Table 2, first two columns indicate a basic header, third to fifth columns indicate a broadcast header, a sixth column indicates "payload". A number in a bracket corresponding to each field indicates a quantity of bits occupied by the field. For example, "version" occupies 3 bits, and "type" occupies 2 bits. A quantity of bits occupied by "payload" is a variable (variable). Herein, "version" ("version") is a version of the broadcast packet P, "ToS" (type of service) is a type of a service, "topo ID" is a topology ID, "flow label" is a flow label, "payload length" indicates lengths of all extension headers plus a length of a packet payload, "hop limit" indicates a maximum quantity of hops of a packet, "next header" in the basic header points to the broadcast header, "next header" in the broadcast header points to XXX, and XXX indicates a type of a next extension header or an upper-layer protocol header of the broadcast header. The field "flow label" indicates traffic generated by a mobile phone software (application, APP) or traffic required by a specific type of quality of service (quality of service, QoS), and is allocated by the source node, to ensure local uniqueness. The field "type"=1 indicates that a type of the broadcast packet P is the second type. The field "source address"=100.1 indicates that a source address is 100.1, and the field "destination address"=255.255 indicates that the packet is broadcast within a wireless network range. The field "alive time"=20 indicates that maximum alive time of the broadcast packet P is 20s, and the field "sequence number"=1000 indicates that a sequence number of the broadcast packet P is 1000. For meanings of all fields in the broadcast header, refer to the foregoing description. Details are not described herein again. It should be noted that Table 2 is merely an example of the broadcast packet P, a quantity of bits occupied by each field in the broadcast packet P is not limited, and the broadcast packet P may include more or fewer fields. The fields "type" and "ACK" in the broadcast header are necessary. It should be noted that the basic header may be replaced with another header, and the basic header may include more or fewer fields.

**Table 2**

| | | | | |
|---|---|---|---|---|
| version | ToS | topo ID (2) | flow label | |
| (3) | (8) | | (19) | |
| payload length | | | next header | hop limit |
| (16) | | | (8)=broadcast header | (8) |
| source address | | | destination address | |
| (16)=100.1 | | | (16)=255.255 | |
| next header | type | ACK | reserved | alive time |
| (8)=XXX | (2)=1 | (1)=0 | (13) | (8)=20 |
| sequence number (32)=1000 | | | | |
| payload (variable) | | | | |

(2) The node A locally caches the broadcast packet P for alive time=20s.
(3) The node B receives the broadcast packet P, caches the broadcast packet P for alive time=20s, caches digest information of the broadcast packet P for 50s, and replies with a response packet to the node A after completing local processing. After deducting local processing time, namely, 2s, from the alive time (alive time=18s), the node B sends the broadcast packet P to other neighboring nodes, namely, the node C, the node D, and the node H, according to a split horizon method. Table 3 shows an example of the response packet for the broadcast packet P. For meanings of all fields in Table 3, refer to Table 2. As shown in Table 3, "hop limit"=1 indicates that a maximum quantity of hops of the packet is 1; "source address"=100.2 indicates that a source address is 100.2, and 100.2 is an address of the node B; "destination address"=100.1 indicates that a destination address is 100.1, and 100.1 is an address of the node A; "type"=1 and "ACK"=1 indicate that the packet is the response packet; "alive time"=0 indicates that maximum alive time of the response packet is 0s; and "payload" is an optional field. It should be noted that regardless of whether "alive time" in the response packet is filled with a value, a node that receives the response packet does not cache the response packet. In this application, the response packet may be referred to as an acknowledgment packet.

**Table 3**

| | | | | |
|---|---|---|---|---|
| version | ToS | topo ID (2) | flow label | |
| (3) | (8) | | (19) | |
| payload length | | | next header | hop limit |
| (16) | | | (8)=Broadcast Header | (8)=1 |
| source address | | | destination address | |
| (16)=100.2 | | | (16)=100.1 | |
| next header | type | ACK | reserved | alive time |
| (8)=XXX | (2)=1 | (1)=1 | (13) | (8)=0 |
| sequence number (32)=1000 | | | | |
| [payload] (variable) | | | | |

(4) The node H (or the node C or the node D) receives the broadcast packet P, caches the broadcast packet P for alive time=18s, caches digest information of the broadcast packet P for 50s, and replies with a response packet to the node B after completing local processing. After deducting local processing time, namely, 3s, from the alive time (alive time=15s), the node H forwards the broadcast packet P to all other neighboring nodes according to a split horizon method. The node H forwards the broadcast packet P to the node C and the node J. The node D forwards the broadcast packet P to the node C and the node K. The node C forwards the broadcast packet P to the node H and the node D.
(5) The node H (or the node C or the node D) may receive broadcast packets P from a plurality of neighboring nodes, and compare the broadcast packets P through a local cache. If the node H identifies that a broadcast packet is a duplicate packet (refer to step 304), the duplicate packet is discarded and is not forwarded.

In this example, after sending the broadcast packet to a neighboring node of any node, the any node may determine, based on whether the neighboring node of the any node makes a response for the broadcast packet, whether the neighboring node of the any node successfully receives the broadcast packet. This improves reliability of the packet.

FIG. 8 shows an example of a improved reliable multicast transmission process according to an embodiment of this application. In FIG. 7, a node A is a source node, a node B, a node C, a node D, and a node H are intermediate nodes, and a node J and a node K are destination nodes. A dashed line between two nodes indicates a communication link between the two nodes. One arrow between two nodes indicates a flow direction of a broadcast packet, and the other arrow indicates a flow direction of a response packet for the broadcast packet. The node H and the node D monitor a multicast address 128.1, and other nodes do not monitor the multicast address 128.1

Operations performed by the nodes in the improved reliable multicast transmission process shown in FIG. 8 are described below.
(1) The node A sends a multicast packet P.
The multicast packet P may be understood as the foregoing first packet. A first field ("type") in the multicast packet P indicates a second type, and the second type corresponds to improved reliable multicast. Table 4 shows an example of the multicast packet P. In other words, Table 4 shows an example of a improved reliable multicast packet. As shown in Table 4, first two columns indicate a basic header, third to fifth columns indicate a broadcast header, a sixth column indicates "payload". A number in a bracket corresponding to each field indicates a quantity of bits occupied by the field. For example, "version" occupies 3 bits, and "type" occupies 2 bits. For meanings of all fields in the multicast packet P, refer to Table 2. Details are not described herein again. The field "source address"=100.1 indicates that a source address is 100.1, and the field "destination address"=128.1 indicates that a destination address is the multicast address 128.1. It should be noted that Table 4 is merely an example of the multicast packet P, a quantity of bits occupied by each field in the multicast packet P is not limited, and the multicast packet P may include more or fewer fields. The fields "type" and "ACK" in the broadcast header are necessary. It should be noted that the basic header may be replaced with another header, and the basic header may include more or fewer fields.

**Table 4**

| | | | | |
|---|---|---|---|---|
| version | ToS | topo ID (2) | flow label | |
| (3) | (8) | | (19) | |
| payload length | | | next header | hop limit |
| (16) | | | (8)=broadcast header | (8) |
| source address | | | destination address | |
| (16)=100.1 | | | (16)=128.1 | |
| next header | type | ACK | reserved | alive time |
| (8)=XXX | (2)=1 | (1)=0 | (13) | (8)=20 |
| sequence number (32)=1000 | | | | |
| payload (variable) | | | | |

(2) The node A locally caches the multicast packet P for alive time=20s.
(3) The node B receives the multicast packet P, caches the multicast packet P for alive time=20s, caches digest information of the multicast packet P for 50s, and replies with a response packet to the node A. The node B does not monitor the multicast address 128.1. After deducting local processing time, namely, 2s, from the alive time (alive time=18s), the node B sends the multicast packet P to other neighboring nodes, namely, the node C, the node D, and the node H, according to a split horizon method. Table 5 shows an example of the response packet for the multicast packet P. For meanings of all fields in Table 5, refer to Table 2. As shown in Table 5, "hop limit"=1 indicates that a maximum quantity of hops of the packet is 1; "source address"=100.2 indicates that a source address is 100.2, and 100.2 is an address of the node B; "destination address"=100.1 indicates that a destination address is 100.1, and 100.1 is an address of the node A; "type"=1 and "ACK"=1 indicate that the packet is the response packet; "alive time"=0 indicates that maximum alive time of the response packet is 0s, that is, the response packet does not need to be cached; and "payload" is an optional field.

**Table 5**

| | | | | |
|---|---|---|---|---|
| version | ToS | topo ID (2) | flow label | |
| (3) | (8) | | (19) | |
| payload length | | | next header | hop limit |
| (16) | | | (8)=Broadcast Header | (8)=1 |
| source address | | | destination address | |
| (16)=100.2 | | | (16)=100.1 | |
| next header | type | ACK | reserved | alive time |
| (8)=XXX | (2)=1 | (1)=1 | (13) | (8)=0 |
| sequence number (32)=1000 | | | | |
| [payload] (variable) | | | | |

(4) The node H (or the node C or the node D) receives the multicast packet P, caches the multicast packet P for alive time=18s, caches digest information of the multicast packet P for 50s, and replies with the response packet to the node B. After deducting local processing time, namely, 3s, from the alive time (alive time=15s), the node H forwards the multicast packet P to all other neighboring nodes according to a split horizon method. The node H forwards the multicast packet P to the node C and the node J. The node D forwards the multicast packet P to the node C and the node K. The node C forwards the multicast packet P to the node H and the node D. Because the node H monitors the multicast address 128.1, the node H sends the multicast packet to a control plane for processing. Similarly, the node D sends the multicast packet to the control plane for processing.
(5) The node H (or the node C or the node D) may receive multicast packets P from a plurality of neighboring nodes, and compare the multicast packets P through a local cache. If the node H identifies that a multicast packet is a duplicate packet (refer to step 404), the duplicate packet is discarded and is not forwarded.

In this example, after sending the multicast packet to a neighboring node of any node, the any node may determine, based on whether the neighboring node of the any node makes a response for the multicast packet, whether the neighboring node of the any node successfully receives the broadcast packet. This improves reliability of the packet.

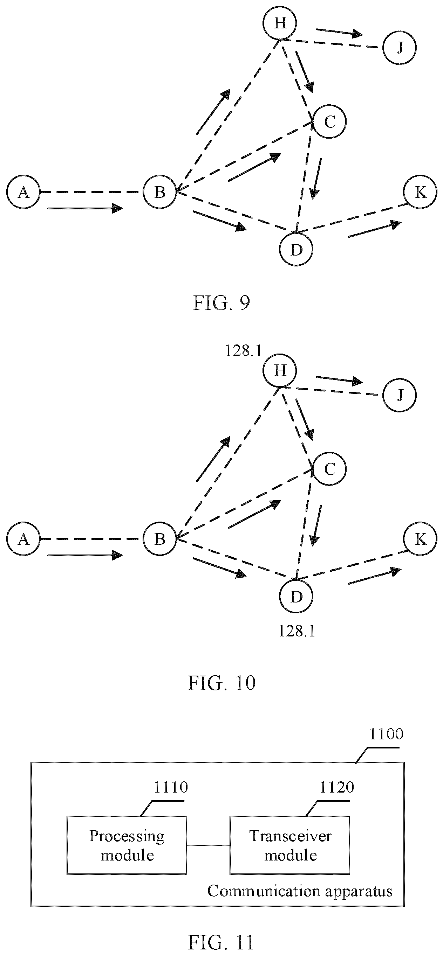

FIG. 9 shows an example of a normal reliable broadcast transmission process according to an embodiment of this application. In FIG. 9, a node A is a source node, a node B, a node C, a node D, and a node H are intermediate nodes, and a node J and a node K are destination nodes. A dashed line between two nodes indicates a communication link between the two nodes. An arrow between two nodes indicates a flow direction of a broadcast packet.

Operations performed by the nodes in the normal reliable broadcast transmission process shown in FIG. 9 are described below.
(1) The node A sends a broadcast packet P.
The broadcast packet P may be understood as the foregoing first packet. A first field ("type") in the broadcast packet P indicates a first type, and the first type corresponds to normal reliable broadcast. Table 6 shows an example of the broadcast packet P. In other words, Table 6 shows an example of a normal reliable broadcast packet. As shown in Table 6, first two columns indicate a basic header, third to fifth columns indicate a broadcast header, a sixth column indicates "payload". A number in a bracket corresponding to each field indicates a quantity of bits occupied by the field. For example, "version" occupies 3 bits, and "type" occupies 2 bits. For meanings of all fields in the basic header and meanings of all fields in the broadcast header in Table 6, refer to Table 2. The field "type"=0 in the broadcast header indicates that a type of the broadcast packet P is the first type. It should be noted that Table 6 is merely an example of the broadcast packet P, a quantity of bits occupied by each field in the broadcast packet P is not limited, and the broadcast packet P may include more or fewer fields. The fields "type" and "ACK" in the broadcast header are necessary. It should be noted that the basic header may be replaced with another header, and the basic header may include more or fewer fields.

**Table 6**

| | | | | |
|---|---|---|---|---|
| version | ToS | topo ID (2) | flow label | |
| (3) | (8) | | (19) | |
| payload length | | | next header | hop limit |
| (16) | | | (8)=broadcast header | (8) |
| source address | | | destination address | |
| (16)=100.1 | | | (16)=255.255 | |
| next header | type | ACK | reserved | alive time |
| (8)=XXX | (2)=0 | (1)=0 | (13) | (8)=20 |
| sequence number (32)=1000 | | | | |
| payload (variable) | | | | |

(2) The node A locally caches the broadcast packet P for alive time=20s.
(3) The node B receives the broadcast packet P, and caches the broadcast packet P for alive time=20s. The node B deducts local processing time, namely, 2s, from the alive time (alive time=18s), and sends the broadcast packet P to other neighboring nodes, namely, the node C, the node D, and the node H, according to a split horizon method.
(4) The node H (or the node C or the node D) receives the broadcast packet P, and caches the broadcast packet P for alive time=18s. The node H deducts local processing time, namely, 3s, from the alive time (alive time=15s), and forwards the broadcast packet P to all other neighboring nodes according to the split horizon method. The node H forwards the broadcast packet P to the node C and the node J. The node D forwards the broadcast packet P to the node C and the node K. The node C forwards the broadcast packet P to the node H and the node D.
(5) The node H (or the node C or the node D) may receive broadcast packets P from a plurality of neighboring nodes, and compare the broadcast packets P through a local cache. If the node H identifies that a broadcast packet is a duplicate packet (refer to step 304), the duplicate packet is discarded and is not forwarded.

In this example, any node forwards the broadcast packet only to a neighboring node of the any node, and does not need to make a response for the received broadcast packet. This reduces packet transmission.

FIG. 10 shows an example of a normal reliable multicast transmission process according to an embodiment of this application. In FIG. 10, a node A is a source node, a node B, a node C, a node D, and a node H are intermediate nodes, and a node J and a node K are destination nodes. A dashed line between two nodes indicates a communication link between the two nodes. An arrow between two nodes indicates a flow direction of a multicast packet. The node H and the node D monitor a multicast address 128.1, and other nodes do not monitor the multicast address 128.1

Operations performed by the nodes in the normal reliable multicast transmission process shown in FIG. 10 are described below.
(1) The node A sends a multicast packet P.
The multicast packet P may be understood as the foregoing first packet. A first field ("type") in the multicast packet P indicates a first type, and the first type corresponds to normal reliable multicast. Table 7 shows an example of the multicast packet P. In other words, Table 7 shows an example of a normal reliable multicast packet. As shown in Table 7, first two columns indicate a basic header, third to fifth columns indicate a broadcast header, and a sixth column indicates "payload". For meanings of all fields in the basic header and meanings of all fields in the broadcast header in Table 7, refer to Table 2. The field "type"=0 in the broadcast header indicates that a type of the multicast packet P is the first type; and the field "destination address"=128.1 indicates that a destination address is the multicast address 128.1. It should be noted that Table 7 is merely an example of the multicast packet P, a quantity of bits occupied by each field in the multicast packet P is not limited, and the multicast packet P may include more or fewer fields. The fields "type" and "ACK" in the broadcast header are necessary. It should be noted that the basic header may be replaced with another header, and the basic header may include more or fewer fields.

| **Table 7** | | | | |
|---|---|---|---|---|
| version | ToS | topo ID (2) | flow label | |
| (3) | (8) | | (19) | |
| payload length | | | next header | hop limit |
| (16) | | | (8)=broadcast header | (8) |
| source address | | | destination address | |
| (16)=100.1 | | | (16)=128.1 | |
| next header | type | ACK | reserved | alive time |
| (8)=XXX | (2)=0 | (1)=0 | (13) | (8)=20 |
| sequence number (32)=1000 | | | | |
| payload (variable) | | | | |

(2) The node A locally caches the multicast packet P for alive time=20s.
(3) The node B receives the multicast packet P, and caches the multicast packet P for alive time=20s. The node B deducts local processing time, namely, 2s, from the alive time (alive time=18s), and sends the multicast packet P to other neighboring nodes, namely, the node C, the node D, and the node H, according to a split horizon method.
(4) The node H (or the node C or the node D) receives the multicast packet P, and caches the multicast packet P for alive time=18s. The node H deducts local processing time, namely, 3s, from the alive time (alive time=15s), and forwards the multicast packet P to all other neighboring nodes according to the split horizon method. The node H forwards the multicast packet P to the node C and the node J. The node D forwards the multicast packet P to the node C and the node K. The node C forwards the multicast packet P to the node H and the node D. Because the node H monitors the multicast address 128.1, the node H sends the multicast packet to a control plane for processing. Similarly, the node D sends the multicast packet to the control plane for processing.
(5) The node H (or the node C or the node D) may receive multicast packets P from a plurality of neighboring nodes, and compare the multicast packets P through a local cache. If the node H identifies that a multicast packet is a duplicate packet (refer to step 304), the duplicate packet is discarded and is not forwarded.

In this example, any node forwards the multicast packet only to a neighboring node of the any node, and does not need to make a response for the received multicast packet. This reduces packet transmission.

The foregoing describes the broadcast communication methods and the multicast communication methods provided in embodiments of this application. With reference to the accompanying drawings, the following describes a structure of a communication apparatus that can implement the broadcast communication methods and/or the multicast communication methods provided in embodiments of this application.

FIG. 11 is a diagram of a structure of a communication apparatus 1100 according to an embodiment of this application. The communication apparatus 1100 may implement functions or steps implemented by the first device in the foregoing method embodiments, may implement functions or steps implemented by the second device in the foregoing method embodiments, or may implement functions or steps implemented by the third device in the foregoing method embodiments. The communication apparatus may include a processing module 1110 and a transceiver module 1120. Optionally, the communication apparatus may further include a storage unit. The storage unit may be configured to store instructions (code or a program) and/or data. The processing module 1110 and the transceiver module 1120 may be coupled to the storage unit. For example, the processing module 1110 may read the instructions (the code or the program) and/or the data in the storage unit, to implement a corresponding method. The foregoing units may be independently disposed, or may be partially or completely integrated. For example, the transceiver module 1120 may include a sending module and a receiving module. The sending module may be a transmitter, and the receiving module may be a receiver. An entity corresponding to the transceiver module 1120 may be a transceiver or a communication interface.

In some possible implementations, the communication apparatus 1100 can correspondingly implement behavior and functions of the second device in the foregoing method embodiments. For example, the communication apparatus 1100 may be the second device, or may be a component (for example, a chip or a circuit) used in the second device. For example, the transceiver module 1120 may be configured to perform all receiving or sending operations performed by the second device in the embodiments shown in FIG. 2 to FIG. 6, for example, step 202 in the embodiment shown in FIG. 2, step 303 and step 307 in the embodiment shown in FIG. 3, step 403 and step 406 in the embodiment shown in FIG. 4, step 503 in the embodiment shown in FIG. 5, step 603 in the embodiment shown in FIG. 6, and/or another process used to support the technology described in this specification. The processing module 1110 is configured to perform all operations other than the receiving and sending operations performed by the second device in the embodiments shown in FIG. 2 to FIG. 6, for example, step 201 in the embodiment shown in FIG. 2, step 301, step 302, and step 312 in the embodiment shown in FIG. 3, step 401, step 402, and step 413 in the embodiment shown in FIG. 4, step 501, step 502, and step 509 in the embodiment shown in FIG. 5, and step 601, step 602, and step 611 in the embodiment shown in FIG. 6.

In a possible implementation, the processing module 1110 is configured to generate a first packet, where a first field in the first packet indicates that a type of the first packet is a first type or a second type, the first type corresponds to normal reliable broadcast, and the second type corresponds to improved reliable broadcast; or the first type corresponds to normal reliable multicast, and the second type corresponds to improved reliable multicast; and the transceiver module 1120 is configured to send the first packet to a first device.

In a possible implementation, the processing module 1110 is specifically configured to: construct a basic header of a network layer, where the basic header includes a source address, a destination address, and a fifth field ("next header") that points to a broadcast header, the source address is a unicast address of a node, and the destination address is an address indicating broadcast within a wireless network range, or the destination address is a multicast address; construct the broadcast header, where the broadcast header includes the foregoing first field, the foregoing second field, and the foregoing third field; and add data ("payload") following the broadcast header to obtain the first packet. The adding data ("payload") following the broadcast header to obtain the first packet may be replaced with: adding one or more headers following the broadcast header and data ("payload") to obtain the first packet.

In a possible implementation, the transceiver module 1120 is further configured to receive a second packet in response to the first packet, where a first field in the second packet indicates that a type of the second packet is the second type, and a second field in the second packet indicates that the first device successfully receives the first packet. Optionally, the processing module 1110 is further configured to: after receiving the second packet in response to the first packet, delete the first packet from a sending queue of the first device.

In a possible implementation, the transceiver module 1120 is further configured to: if a response packet in response to the first packet is not received in first waiting time after the first packet is sent, send a third packet as a retransmitted packet of the first packet to the first device.

In a possible implementation, the processing module 1110 is further configured to: if a response packet in response to the first packet is not received in first waiting time after the first packet is sent, determine fifth alive time, where the fifth alive time is equal to the first alive time minus the first waiting time; and when the fifth alive time is less than 0, stop retransmitting the first packet.

In a possible implementation, the third field in the first packet indicates the first alive time of the first packet in a network. The processing module 1110 is further configured to: locally cache the first packet for storage; and delete the first packet after time for locally caching the first packet for storage exceeds the first alive time.

In some possible implementations, the communication apparatus 1100 can correspondingly implement behavior and functions of the first device in the method embodiments. For example, the communication apparatus 1100 may be the first device, or may be a component (for example, a chip or a circuit) used in the first device. For example, the transceiver module 1120 may be configured to perform all receiving or sending operations performed by the first device in the embodiments shown in FIG. 2 to FIG. 6, for example, step 202 in the embodiment shown in FIG. 2, step 303, step 307, step 308, and step 309 in the embodiment shown in FIG. 3, step 403, step 406, step 409, and step 410 in the embodiment shown in FIG. 4, step 503 and step 507 in the embodiment shown in FIG. 5, step 603 and step 608 in the embodiment shown in FIG. 6, and/or another process used to support the technology described in this specification. The processing module 1110 is configured to perform all operations other than the receiving and sending operations performed by a receiver, for example, step 203 in the embodiment shown in FIG. 2, step 304, step 305, step 306, step 310, step 311, and step 313 in the embodiment shown in FIG. 3, step 404, step 405, step 407, step 408, step 411, step 412, and step 414 in the embodiment shown in FIG. 4, step 504, step 505, step 506, step 508, and step 510 in the embodiment shown in FIG. 5, and step 604, step 605, step 606, step 607, step 609, step 610, and step 612 in the embodiment shown in FIG. 6.

In a possible implementation, the transceiver module 1120 is configured to receive a first packet from a second device, where a first field in the first packet indicates that a type of the first packet is a first type or a second type, the first type corresponds to normal reliable broadcast, and the second type corresponds to improved reliable broadcast, or the first type corresponds to normal reliable multicast, and the second type corresponds to improved reliable multicast. The processing module 1110 is configured to process the first packet based on the type of the first packet.

In a possible implementation, the processing module 1110 is specifically configured to: when the type of the first packet is the second type, send, by using the transceiver module 1120, a second packet in response to the first packet to the second device, and add the first packet to a packet sending queue of a first neighboring node (for example, the foregoing third device), where a first field in the second packet indicates that a type of the second packet is the second type, and a second field in the second packet indicates that the first device successfully receives the first packet.

In a possible implementation, the transceiver module 1120 is further configured to send the first packet to the first neighboring node. The processing module 1110 is further configured to: after receiving a fourth packet that is from the first neighboring node and that is in response to the first packet, delete the first packet from the packet sending queue of the first neighboring node, where a first field in the fourth packet indicates that a type of the fourth packet is the second type, and a second field in the fourth packet indicates that the first neighboring node successfully receives the first packet.

In a possible implementation, the transceiver module 1120 is further configured to: if a response packet that is from the first neighboring node and that is in response to the first packet is not received in first waiting time after the first packet is sent to the first neighboring node, send a fifth packet as a retransmitted packet of the first packet to the first neighboring node.

In a possible implementation, the second type corresponds to the improved reliable multicast, and a destination address in the first packet is a multicast address. The processing module 1110 is further configured to: when the multicast address in the first packet is monitored, send the first packet to a control plane program or an application for processing, and forward the first packet to the first neighboring node; or when the multicast address in the first packet is not monitored, forward the first packet to the first neighboring node.

In a possible implementation, the processing module 1110 is specifically configured to: when the type of the first packet is the first type, add the first packet to a packet sending queue of a first neighboring node. The transceiver module 1120 is further configured to send the first packet to the first neighboring node, where a third field in the first packet sent to the first neighboring node indicates third alive time of the first packet in a network, and a third field in the first packet from the second device indicates first alive time of the first packet in the network. The third alive time is shorter than or equal to the first alive time.

In a possible implementation, the processing module 1110 is specifically configured to: when the type of the first packet is the first type, add the first packet to a packet sending queue of a first neighboring node; before the first packet is sent to the first neighboring node, determine sixth alive time, where the sixth alive time is equal to the first alive time minus local processing time, and the local processing time is time for processing the first packet by the first device; and when the sixth alive time is less than 0, cancel sending the first packet to the first neighboring node.

In a possible implementation, the processing module 1110 is further configured to: locally cache the first packet for storage; and delete the first packet after time for locally caching the first packet for storage exceeds the first alive time.

In a possible implementation, the processing module 1110 is further configured to: in a process of locally caching the first packet for storage, if a new neighboring node is found, add the first packet to a sending queue of the new neighboring node.

In a possible implementation, the processing module 1110 is further configured to determine, based on a source address and a sequence number that are in the first packet, whether the first packet is a duplicate packet. The processing module 1110 is specifically configured to: when the first packet is a new packet (namely, a non-duplicate packet), process the first packet based on the type of the first packet.

In some possible implementations, the communication apparatus 1100 can correspondingly implement behavior and functions of the third device in the foregoing method embodiments. For example, the communication apparatus 1100 may be the third device, or may be a component (for example, a chip or a circuit) used in the third device. For example, the transceiver module 1120 may be configured to perform all receiving or sending operations performed by the second device in the embodiments shown in FIG. 3 to FIG. 6, for example, step 308 and step 309 in the embodiment shown in FIG. 3, step 409 and step 410 in the embodiment shown in FIG. 4, step 507 in the embodiment shown in FIG. 5, step 608 in the embodiment shown in FIG. 6, and/or another process used to support the technology described in this specification. The processing module 1110 is configured to perform all operations other than the receiving and sending operations performed by the second device in the embodiments in FIG. 3 to FIG. 6, for example, caching the first packet.

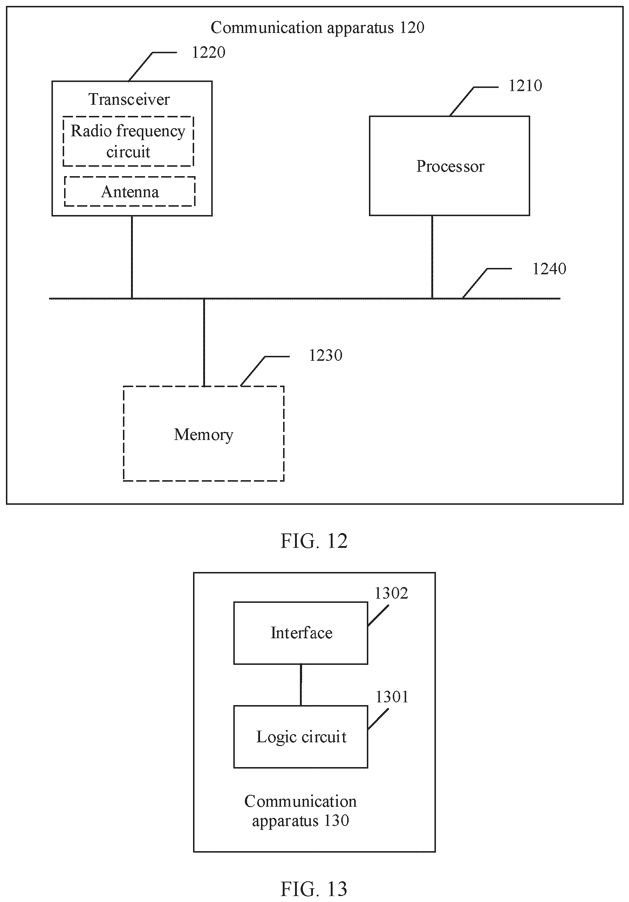

FIG. 12 is a diagram of a structure of another communication apparatus 120 according to an embodiment of this application. The communication apparatus in FIG. 12 may be the foregoing second device, the foregoing first device, or the foregoing third device.

As shown in FIG. 12, the communication apparatus 120 includes at least one processor 1210 and a transceiver 1220.

In some embodiments of this application, the processor 1210 and the transceiver 1220 may be configured to perform a function, an operation, or the like performed by the second device. The transceiver 1220 performs, for example, all receiving or sending operations performed by the second device in the embodiments in FIG. 2 to FIG. 6. The processor 1210 is configured to perform, for example, all operations other than the receiving and sending operations performed by the second device in the embodiments in FIG. 2 to FIG. 6.

In some embodiments of this application, the processor 1210 and the transceiver 1220 may be configured to perform a function, an operation, or the like performed by the first device. The transceiver 1220 performs, for example, all receiving or sending operations performed by the first device in the embodiments in FIG. 2 to FIG. 6. The processor 1210 is configured to perform, for example, all operations other than the receiving and sending operations performed by the first device in the embodiments in FIG. 2 to FIG. 6.

In some embodiments of this application, the processor 1210 and the transceiver 1220 may be configured to perform a function, an operation, or the like performed by the third device. The transceiver 1220 performs, for example, all receiving or sending operations performed by the third device in the embodiments in FIG. 3 to FIG. 6. The processor 1210 is configured to perform, for example, all operations other than the receiving and sending operations performed by the third device in the embodiments in FIG. 3 to FIG. 6.

The transceiver 1220 is configured to communicate with another device/apparatus through a transmission medium. The processor 1210 sends and receives data and/or signaling by using the transceiver 1220, and is configured to implement the methods in the foregoing method embodiments. The processor 1210 may implement a function of the processing module 1110, and the transceiver 1220 may implement a function of the transceiver module 1120.

Optionally, the transceiver 1220 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. An input/output apparatus like a touchscreen, a display, or a keyboard, is mainly configured to: receive data input by a user, and output data to the user.

Optionally, the communication apparatus 120 may further include at least one memory 1230, configured to store program instructions and/or data. The memory 1230 is coupled to the processor 1210. The coupling in this embodiment of this application may be an indirect coupling or a communication connection between apparatuses, units, or modules in an electrical form, a mechanical form, or another form, and is used for information exchange between the apparatuses, the units, or the modules. The processor 1210 may operate in cooperation with the memory 1230. The processor 1210 may execute the program instructions stored in the memory 1230. At least one of the at least one memory may be included in the processor.

After the communication apparatus 120 is powered on, the processor 1210 may read a software program in the memory 1230, interpret and execute instructions of the software program, and process data of the software program. When data needs to be sent in a wireless manner, the processor 1210 performs baseband processing on the to-be-sent data, and then outputs a baseband signal to a radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1210. The processor 1210 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

A specific connection medium between the transceiver 1220, the processor 1210, and the memory 1230 is not limited in embodiments of this application. In this embodiment of this application, in FIG. 12, the memory 1230, the processor 1210, and the transceiver 1220 are connected through a bus 1240. The bus is represented by a bold line in FIG. 12. A connection manner between other components is merely an example for description, and does not constitute a limitation. The bus may be classified into an address bus, a data bus, a control bus, and the like. For ease of representation, only one bold line represents the bus in FIG. 12, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or a transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by a combination of hardware in the processor and a software module.

FIG. 13 is a diagram of a structure of another communication apparatus 130 according to an embodiment of this application. As shown in FIG. 13, the communication apparatus shown in FIG. 13 includes a logic circuit 1301 and an interface 1302. The processing module 1110 in FIG. 11 may be implemented by using the logic circuit 1301, and the transceiver module 1120 in FIG. 11 may be implemented by using the interface 1302. The logic circuit 1301 may be a chip, a processing circuit, an integrated circuit, a system-on-chip (system-on-chip, SoC), or the like, and the interface 1302 may be a communication interface, an input/output interface, or the like. In this embodiment of this application, the logic circuit and the interface may be further coupled to each other. A specific manner of a connection between the logical circuit and the interface is not limited in embodiments of this application.

In some embodiments of this application, the logic circuit and the interface may be configured to perform a function, an operation, or the like performed by the second device.

In some embodiments of this application, the logic circuit and the interface may be configured to perform a function, an operation, or the like performed by the first device.

This application further provides a computer-readable storage medium. The computer-readable storage medium stores a computer program or instructions. When the computer program or the instructions are run on a computer, the computer is enabled to perform the methods in the foregoing method embodiments. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. The computer may be a general-purpose computer, a dedicated computer, a computer network, or another programmable apparatus.

It should be noted that a person of ordinary skill in the art may understand that all or some of the steps of the methods in the foregoing embodiments may be implemented by a program instructing related hardware. The program may be stored in the computer-readable storage medium. The computer-readable storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically erasable read-only memory (Electrically Erasable Programmable Read-Only Memory, EEPROM), a compact disc read-only memory (Compact Disc read-only memory, CD-ROM), or another optical disk memory, a magnetic disk memory, a magnetic tape memory, or any other computer-readable medium that can be used to carry or store data.

This application further provides a computer program product. The computer program product includes instructions or a computer program. When the instructions or the computer program are/is run on a computer, the methods in the foregoing embodiments are performed. The computer program product includes one or more computer instructions. When the computer program instructions are loaded and executed on the computer, the procedure or functions according to embodiments of this application are all or partially generated.

All or some of the foregoing embodiments may be implemented by using software, hardware, firmware, or any combination thereof. When software is used to implement embodiments, all or some of embodiments may be implemented in a form of the computer program product.

This application further provides a communication system, including the foregoing second device and the foregoing first device. Optionally, the communication system further includes the foregoing third device.

The technical solutions of this application essentially, or the part contributing to the conventional technology, or all or some of the technical solutions may be implemented in a form of a software product. The computer program product is stored in a storage medium, and includes several instructions for instructing a device (which may be a terminal device, a network device, a vehicle-mounted device, a router, a server, a robot, a chip, or the like) to perform all or some of the steps of the methods described in embodiments of this application.

## Claims

1. A communication method, comprising:
generating a first packet, wherein a first field in the first packet indicates that a type of the first packet is a first type or a second type, the first type corresponds to normal reliable broadcast, and the second type corresponds to improved reliable broadcast; or the first type corresponds to normal reliable multicast, and the second type corresponds to improved reliable multicast; and
sending the first packet to a first device.

2. The method according to claim 1, wherein the improved reliable broadcast indicates that the device makes a response for a received broadcast packet, the normal reliable broadcast indicates that the device does not make a response for a received broadcast packet, the improved reliable multicast indicates that the device makes a response for a received multicast packet, and the normal reliable multicast indicates that the device does not make a response for a received multicast packet.

3. The method according to claim 1 or 2, wherein the first packet further comprises a second field, and if the first field in the first packet indicates that the type of the first packet is the second type, the second field in the first packet is used by the first device to make a response.

4. The method according to any one of claims 1 to 3, wherein the first packet further comprises a third field, and the third field in the first packet indicates first alive time of the first packet in a network.

5. The method according to any one of claims 1 to 4, wherein the first packet further comprises a sequence number, and the sequence number indicates a serial number of the first packet.

6. The method according to any one of claims 1 to 5, wherein the method further comprises:
receiving a second packet in response to the first packet, wherein a first field in the second packet indicates that a type of the second packet is the second type, and a second field in the second packet indicates that the first device successfully receives the first packet.

7. The method according to claim 6, wherein before the receiving a second packet in response to the first packet, the method further comprises:
when a response packet in response to the first packet is not received in first waiting time after the first packet is sent, sending a third packet as a retransmitted packet of the first packet to the first device.

8. The method according to claim 7, wherein the third field in the first packet indicates the first alive time of the first packet in the network, a third field in the third packet indicates second alive time of the first packet in the network, and the second alive time is shorter than or equal to the first alive time.

9. The method according to any one of claims 1 to 8, wherein the third field in the first packet indicates the first alive time of the first packet in the network; and the method further comprises:
locally caching the first packet for storage; and
deleting the first packet after time for locally caching the first packet for storage exceeds the first alive time.

10. A communication method, wherein the method is applied to a first device, and the method comprises:
receiving a first packet from a second device, wherein a first field in the first packet indicates that a type of the first packet is a first type or a second type, the first type corresponds to normal reliable broadcast, and the second type corresponds to improved reliable broadcast; or the first type corresponds to normal reliable multicast, and the second type corresponds to improved reliable multicast; and
processing the first packet based on the type of the first packet.

11. The method according to claim 10, wherein the improved reliable broadcast indicates that the device makes a response for a received broadcast packet, the normal reliable broadcast indicates that the device does not make a response for a received broadcast packet, the improved reliable multicast indicates that the device makes a response for a received multicast packet, and the normal reliable multicast indicates that the device does not make a response for a received multicast packet.

12. The method according to claim 10 or 11, wherein the first packet further comprises a second field, and if the first field in the first packet indicates that the type of the first packet is the second type, the second field in the first packet is used by the first device to make a response.

13. The method according to any one of claims 10 to 12, wherein the first packet further comprises a third field, and the third field in the first packet indicates first alive time of the first packet in a network.

14. The method according to any one of claims 10 to 13, wherein the first packet further comprises a sequence number, and the sequence number indicates a serial number of the first packet.

15. The method according to any one of claims 10 to 14, wherein the processing the first packet based on the type of the first packet comprises:
when the type of the first packet is the second type, sending a second packet in response to the first packet to the second device, and adding the first packet to a packet sending queue of a first neighboring node, wherein a first field in the second packet indicates that a type of the second packet is the second type, and a second field in the second packet indicates that the first device successfully receives the first packet.

16. The method according to claim 15, wherein after the adding the first packet to a packet sending queue of a first neighboring node, the method further comprises:
sending the first packet to the first neighboring node; and
after receiving a fourth packet that is from the first neighboring node and that is in response to the first packet, deleting the first packet from the packet sending queue of the first neighboring node, wherein a first field in the fourth packet indicates that a type of the fourth packet is the second type, and a second field in the fourth packet indicates that the first neighboring node successfully receives the first packet.

17. The method according to claim 16, wherein a third field in the first packet sent to the first neighboring node indicates third alive time of the first packet in the network, the third field in the first packet from the second device indicates the first alive time of the first packet in the network, and the third alive time is shorter than or equal to the first alive time.

18. The method according to claim 15, wherein the second type corresponds to the improved reliable multicast, and a destination address in the first packet is a multicast address; and the method further comprises:
when the multicast address in the first packet is monitored, sending the first packet to a control plane program or an application for processing, and forwarding the first packet to the first neighboring node; or
when the multicast address in the first packet is not monitored, forwarding the first packet to the first neighboring node.

19. The method according to any one of claims 10 to 14, wherein the processing the first packet based on the type of the first packet comprises:
when the type of the first packet is the first type, adding the first packet to a packet sending queue of a first neighboring node; and
sending the first packet to the first neighboring node, wherein a third field in the first packet sent to the first neighboring node indicates third alive time of the first packet in the network, the third field in the first packet from the second device indicates the first alive time of the first packet in the network, and the third alive time is shorter than or equal to the first alive time.

20. The method according to any one of claims 10 to 19, wherein the third field in the first packet from the second device indicates the first alive time of the first packet in the network; and the method further comprises:
locally caching the first packet for storage; and
deleting the first packet after time for locally caching the first packet for storage exceeds the first alive time.

21. The method according to claim 20, wherein the method further comprises:
locally caching digest information of the first packet for fourth alive time, wherein the fourth alive time is longer than the first alive time.

22. A communication apparatus, comprising a module or unit configured to implement the method according to any one of claims 1 to 9.

23. A communication apparatus, comprising a module or unit configured to implement the method according to any one of claims 10 to 21.

24. A computer-readable storage medium, wherein the computer-readable storage medium stores a computer program, the computer program comprises program instructions, and when the program instructions are executed, a computer is enabled to perform the method according to any one of claims 1 to 9, or when the program instructions are executed, a computer is enabled to perform the method according to any one of claims 10 to 21.

25. A communication apparatus, comprising a processor, wherein the processor is configured to: when instructions are executed, enable the communication apparatus to perform the method according to any one of claims 1 to 9, or enable the communication apparatus to perform the method according to any one of claims 10 to 21.

26. The apparatus according to claim 25, wherein the apparatus further comprises a memory, and the memory is configured to store the instructions.

27. A chip, wherein the chip comprises a processor and a communication interface, and the processor reads, through the communication interface, instructions stored in a memory, to perform the method according to any one of claims 1 to 9, or perform the method according to any one of claims 10 to 21.
